# EUROPÄISCHE PATENTSCHRIFT

(11) **EP 4 093 998 B1**
(45) Veröffentlichungstag und Bekanntmachung des Hinweises auf die Patenterteilung: **03.09.2025**
(21) Anmeldenummer: 21700953.9
(22) Anmeldetag: 21.01.2021
(51) Int. Cl.: F16K 3/24, F16K 11/078, F16K 11/085

(54) **VENTIL**
VALVE
SOUPAPE

(30) Priorität: 21.01.2020 EP 20152892
(43) Veröffentlichungstag der Anmeldung: 30.11.2022
(73) Patentinhaber: Aurotec GmbH, 4844 Regau (AT); NORDSON CORPORATION, Westlake, OH 44145-1119 (US)
(72) Erfinder: HERMANN, Helmut, 48317 Drensteinfurt (DE); WÖSTMANN, Stefan, 48336 Sassenberg (DE); ZIKELI, Stefan, 4844 Regau (AT); ZAUNER, Philipp, 4840 Vöcklabruck (AT); LONGIN, Michael, 8983 Bad Mitterndorf (AT)
(74) Vertreter: SONN Patentanwälte GmbH & Co KG
(86) Internationale Anmeldenummer: PCT/EP2021/051231
(87) Internationale Veröffentlichungsnummer: WO 2021/148487

(56) Entgegenhaltungen:
- CH-A- 400 700
- DE-A1- 2 301 883
- DE-A1- 3 122 452
- DE-C2- 3 815 897

## Beschreibung

Die Erfindung betrifft ein Ventil mit einem Ventilgehäuse und einem Absperrelement, wobei das Ventilgehäuse einen Hohlraum zum Aufnehmen des Absperrelements, zumindest eine Einlassöffnung zum Einströmen eines Fluids in den Hohlraum und eine oder mehrere Auslassöffnungen zum Ausströmen des Fluids aus dem Hohlraum aufweist, wobei das Absperrelement einen Führungskörper aufweist und beweglich zumindest teilweise in dem Hohlraum des Ventilgehäuses angeordnet ist. Weiters betrifft die Erfindung ein Verfahren zum Transportieren von Fluiden.

In vielen technischen Herstellungsprozessen ist es wünschenswert, auf kontinuierlicher Fließbasis mit konstant vollen und/oder teilweise gefüllten Materialzufuhrleitungen zu arbeiten. Ein Beispiel hierfür ist die Herstellung geformter Celluloseprodukte wie Fasern, Folien, Filme aus dem nachwachsenden Rohstoff Cellulose. Bei diesem Herstellungsprozess werden geformte Celluloseartikel durch Bildung von Celluloselösungen in einem organischen Lösungsmittel und durch Verspinnen der Cellulose/Lösungsschmelze zur Bildung einer Faser oder eines Films hergestellt. Eine bevorzugte Form des Lösungsmittels ist ein tertiäres Amin-N-oxid, typischerweise N-Methyl-Morpholin-N-oxid (NMMO). Diese Celluloselösungen sind üblicherweise hochviskos - mit einer Viskosität von typischerweise 50.000 bis 100.000.000 mPas. Solch ein Celluloselösungs-Herstellungsprozess wird in der EP 0 356 419 B1 beschrieben. Problematisch bei der Verarbeitung von Celluloselösungen ist deren hohe benötigte Verarbeitungstemperatur (üblicherweise 80 °C bis 130 °C) und die Instabilität der Celluloselösung bei diesen Temperaturen. Es ist daher erstrebenswert totraumfrei und stockungsfrei zu arbeiten.

Im Stand der Technik sind verschiedene Formen von Ventilen bekannt. Die DE 38 15 897 C2 zeigt eine Anfahrventil-Drossel-Einheit mit einem Austragskanal, der sich zu einem Extrusionswerkzeug weitet. Im Gehäuse der Anfahrventil-Drossel-Einheit ist eine Führungs- und Anfahrbohrung vorgesehen, in der ein Anfahrventil- und Drossel-Körper in Richtung seiner Längsachse, quer zur Achse des Austragskanals, verschiebbar und drehbar angeordnet ist. Der Anfahr- und Drossel-Körper weist zwei Verschließabschnitt auf, zwischen denen ein Drosselkörper angeordnet ist. An einem inneren Verschließabschnitt ist auf der dem Drosselkörper abgewandten Seite ein Anfahrventilkörper ausgebildet. Dieser soll einerseits Abdichten und andererseits eine Anfahr-Auslassöffnung in der Bohrung freilassen, die nach außen aus dem Ventil-Drossel-Gehäuse herausführt. Weitere Ventile sind beispielsweise aus der DE 2751225, der DE 102007047726 und der DE 102005037268 bekannt.

Weiters beschreiben die US 3,817,668 und die US 3,746,481 Schmelzepumpen, die Zahnräder als Mittel zur Steuerung des Fluidflusses verwenden. Diese haben sich jedoch bei der Einleitung, Verteilung, Steuerung des Flusses heißer Flüssigkeiten, insbesondere heißer Kunststoffflüssigkeitsschmelzen, nicht geeignet erwiesen und können nicht als Umschalt- und/oder Umlenk-Verteilventile eingesetzt werden.

Die DE 31 22 452 A1, die CH 400 700 A und die DE 23 01 883 A1 zeigen Haushalts-Mischventile.

Die Aufgabe der vorliegenden Erfindung besteht darin, zumindest einzelne Nachteile des Standes der Technik zu lindern bzw. zu beheben. Die Erfindung setzt sich insbesondere zum Ziel, ein Ventil und ein Verfahren zum Transport von Fluiden zur Verfügung zu stellen, in dem Fluidströmungen verbessert werden und bei dem eine Auslassöffnung selektiv abgesperrt werden kann.

Diese Aufgabe wird durch ein Ventil mit einem Ventilgehäuse und einem Absperrelement gelöst, wobei das Ventilgehäuse einen Hohlraum zum Aufnehmen des Absperrelements, zumindest eine Einlassöffnung zum Einströmen eines Fluids in den Hohlraum und eine oder mehrere Auslassöffnungen zum Ausströmen des Fluids aus dem Hohlraum aufweist, wobei das Absperrelement einen Führungskörper aufweist und beweglich zumindest teilweise in dem Hohlraum des Ventilgehäuses angeordnet ist, und das Absperrelement zumindest einen Absperrvorsprung zum Absperren mindestens einer der einen oder mehreren Auslassöffnungen aufweist,
wobei in dem Hohlraum zwischen dem Führungskörper des Absperrelements und dem Ventilgehäuse ein Spalt ausgebildet ist, durch den Fluid strömen kann und ohne Einsatz einer Dichtung der Spalt einen Leckagestrom des Fluids bildet, und wobei der Führungskörper eine in Längsrichtung des Führungskörper verlaufende Nut aufweist und/oder dass das Ventilgehäuse eine von einer Auslassöffnung in Richtung der zumindest einen der einen oder mehreren Einlassöffnungen verlaufende Nut aufweist,
wobei das Ventilgehäuse eine Heizung und/oder eine Kühlung zur Regelung der Temperatur des Ventils aufweist.

Diese Aufgabe wird weiter durch ein Ventil mit einem Ventilgehäuse und einem Absperrelement gelöst, wobei das Ventilgehäuse einen Hohlraum zum Aufnehmen des Absperrelements, zumindest eine Einlassöffnung zum Einströmen eines Fluids in den Hohlraum und eine oder mehrere Auslassöffnungen zum Ausströmen des Fluids aus dem Hohlraum aufweist, wobei das Absperrelement einen Führungskörper aufweist und beweglich zumindest teilweise in dem Hohlraum des Ventilgehäuses angeordnet ist, und das Absperrelement zumindest einen Absperrvorsprung zum Absperren mindestens einer der einen oder mehreren Auslassöffnungen aufweist,
wobei das Ventil mehrere Auslassöffnungen aufweist,
der Absperrvorsprung derart geformt ist, dass in zumindest einer Stellung, in der eine erste der Auslassöffnungen mit dem Absperrvorsprung abgesperrt ist und die Einlassöffnung und eine zweite der Auslassöffnungen für die Strömung eines Fluids offen sind, eine Kante des Absperrvorsprungs zumindest teilweise einem Umfang der zweiten der Auslassöffnungen folgt, wobei
das Ventilgehäuse eine Heizung und/oder eine Kühlung zur Regelung der Temperatur des Ventils aufweist.

Weiters wird die Aufgabe durch ein Verfahren zum Transport von Fluiden, wobei ein Fluidstrom in einem erfindungsgemäßen Ventil geregelt und/oder gesteuert wird, gelöst.

Demnach weist das Absperrelement des Ventils zumindest einen Absperrvorsprung zum Absperren mindestens einer der Auslassöffnungen auf. Über die Einlassöffnung kann ein Fluid in den Hohlraum des Ventilgehäuses einströmen, der durch das Ventilgehäuse begrenzt ist. In dem Hohlraum ist das Absperrelement zumindest teilweise angeordnet, wobei das Absperrelement gegenüber dem Ventilgehäuse des Ventils bewegbar ist. Der zumindest eine Absperrvorsprung des Absperrelements ist derart ausgestaltet, dass diese mindestens eine Auslassöffnung zumindest teilweise absperrt. Dadurch kann das Fluid aus dem Hohlraum je nach Stellung des Absperrelements nicht oder nur begrenzt oder vollständig ungehindert über die abgesperrten Auslassöffnungen aus dem Ventil ausströmen. Durch Bewegen des Absperrelements in dem Hohlraum kann die Absperrung mindestens einer Auslassöffnung mithilfe des zumindest einen Absperrvorsprungs geregelt werden, sodass die abzusperrende Auslassöffnung variabel zwischen 0 und 100 % abgesperrt ist. Dadurch ist eine stufenlose Regelung des durch die Auslassöffnungen strömenden Fluids möglich. Vorzugsweise sind in einer Stellung, in der eine Auslassöffnung vollständig abgeschlossen ist, zumindest zwei andere Auslassöffnungen vollständig geöffnet.

Der Absperrvorsprung des Absperrelements weist bevorzugt die Form einer Zunge auf. Dabei ist der Absperrvorsprung derart ausgestaltet, dass die Fluidströmung durch die Zungen-Form des Absperrvorsprungs gesteuert werden kann, indem das Fluid den Absperrvorsprung anströmt und von diesem in Richtung mindestens einer geöffneten Auslassöffnung umgelenkt wird. Dadurch kann das Fluid zu mindestens einer offenen Auslassöffnung, insbesondere zumindest zwei offenen Auslassöffnungen, weitergeleitet und am Austreten durch die von dem Absperrvorsprung mindestens eine abgesperrte Auslassöffnung gehindert werden. Eine weitere Möglichkeit des Betriebes ist es ein Ventil mit nur einem Zulauf und einem Ablauf Zungenförmig zu gestalten, damit totraumfrei abgesperrt werden kann. Dadurch ist eine Steuerung des durch die Auslassöffnungen strömenden Fluids möglich. Vorteilhafterweise ist der Absperrvorsprung derart geformt ist, dass in zumindest einer Stellung, in der eine erste der Auslassöffnungen mit dem Absperrvorsprung abgesperrt ist und die Einlassöffnung und eine zweite der Auslassöffnungen für die Strömung eines Fluids offen sind, eine Kante des Absperrvorsprungs zumindest teilweise einen Umfang einer zweiten der Auslassöffnungen folgt. Vorzugsweise ist der Absperrvorsprung derart geformt, dass in zumindest einer Stellung des Absperrvorsprungs, in der eine der Auslassöffnungen abgesperrt ist, zumindest zwei der Auslassöffnungen geöffnet, insbesondere vollständig offen, sind.

Alternativ oder zusätzlich ist der Absperrvorsprung gleichzusetzen mit einer Durchflussausnehmung, die eine Fluidströmung zwischen der zumindest einen Einlassöffnung und den nicht durch den zumindest einen Absperrvorsprung abgesperrten Auslassöffnungen ermöglicht. Dabei ist die Durchflussausnehmung eine Ausnehmung in dem Absperrelement, die über den Hohlraum derart mit zumindest einer Einlassöffnung und mindestens einer Auslassöffnung, vorzugsweise mindestens zwei Auslassöffnungen, verbunden ist, dass Fluid von zumindest einer Einlassöffnung über die Durchflussausnehmung zu mindestens einer Auslassöffnung, vorzugsweise mindestens zwei Auslassöffnungen, strömen kann.

Vorzugsweise begrenzen die Auslassöffnungen und vorteilhafterweise die Einlassöffnung die insbesondere prismenförmige Mantelfläche des Hohlraums.

Das erfindungsgemäße Ventil kann zur totraumfreien Zuführung, Abführung, Verteilung, Schaltung und/oder Förderlimitierung von hochviskosen Flüssigkeiten und Schmelzen verwendet werden. Durch die spezielle Ausgestaltung des Absperrelements kann das Ventil für hochviskose Flüssigkeiten und Schmelzen im Bereich der teilkristallinen Hochleistungsthermoplaste, wie PEK (Polyetherketon), PPEK (Polyphthalazinetherketon), PPS (Polyphenylensulfid), oder amorphen Hochleistungsthermoplaste wie PAI (Polyamidimid), PPSU (Polyphenylsulfon), PSU (Polysulfon) bzw. PES (Polyethersulfon) in den entsprechenden Herstellungsprozessen eingesetzt werden. Das erfindungsgemäße Ventil kann ebenfalls in den Herstellungsprozessen teilkristalliner und amorpher Thermoplaste, wie PA (Polyamid), PA6 (Polyamid 6; Polyamid aus Caprolactam), PA66 (Polyamid 66; Polyamid aus Hexamethylendiamin), PBT (Polybutylenterephthalat), POM (Polyoxymethylen), PET (Polyethylenterephthalat), PP (Polypropylen), PE (Polyethylen), PTFE (Polytetrafluorethylen) eingesetzt werden. Solche Verfahren und Herstellungsprozesse umfassen typischerweise Extrusions-, Spritz-, Blasform-, Beschichtungs- und Sprühtechniken, wie z. B. die Herstellung von synthetischen Textilfasern, Kunststoffschläuchen, Kunststofffolien und -filmen sowie Schutz- und/oder Isolierbeschichtungen für elektrische Leiterdrähte.

Bevorzugt wird das erfindungsgemäße Ventil bei der Herstellung von Cellulose oder bei Leitungen zum Transport von Celluloselösungen verwendet. Besonders bevorzugt wird das erfindungsgemäße Ventil beim Transport von Celluloselösungen verwendet, die als Extrusionsmedien für den Formungsprozess zum Einsatz kommen. Dabei wird die Cellulosekonzentration in für Lyocellverfahren üblichen Größen gewählt. So kann die Cellulosekonzentration in der Celluloselösung 4 % bis 23 %, vorzugsweise 6 % bis 20 %, insbesondere 8 % bis 18 % oder 10 % bis 16 %, sein (alle %-Angaben in Masse-%).

Vorzugsweise ist das Lösungsmittel der Celluloselösung ein tertiäres Aminoxid (Amin-N-oxid), insbesondere bevorzugt N-Methyl-morpholin-N-oxid. Es kann alternativ oder zusätzlich ein ionisches Lösungsmittel sein. Derartige ionische Lösungsmittel sind beispielsweise in WO 03/029329; WO 2006/000197 A1; Parviainen et al., RSC Adv., 2015, 5, 69728-69737; Liu et al., Green Chem. 2017, DOI: 10.1039/c7gc02880f; Hauru et al., Cellulose (2014) 21:4471-4481; Fernändez et al. J Membra Sci Technol 2011, S:4; etc. beschrieben und enthalten vorzugsweise organische Kationen, wie z.B. Ammonium-, Pyrimidium- oder Imidazoliumkationen, vorzugsweise 1,3-Dialkyl-imidazolium Salze, wie Halogenide. Wasser wird auch hier vorzugsweise als Nicht-Lösungsmittel von Cellulose verwendet. Besonders bevorzugt ist eine Lösung von Cellulose und Butyl-3-methyl-imidazolium (BMIM), z.B. mit Chlorid als Gegenion (BMIMCl), oder 1-Ethyl-3-methyl-imidazolium (auch vorzugsweise als Chlorid, Acetat oder Diethylphosphat) oder 1-hexyl-3-methylimidazolium oder 1-hexyl-1-methylpyrrolidinium (vorzugsweise mit einem bis(trifluoromethylsulfonyl)amid Anion), und Wasser. Weitere ionische Lösungsmittel sind 1,5-Diazabicyclo[4.3.0]non-5-enium, vorzugsweise als Acetat; 1-Ethyl-3-methylimidazoliumacetat, 1,3-Dimethylimidazolium-acetat, 1-Ethyl-3-methylirnidazolium-chlorid, 1-Butyl3-methylimidazoliumacetat, 1-Ethyl-3-methylimidazolium-diethylphosphat, 1-Methyl-3-methylimidazolium-dimethylphosphat, 1-Ethyl-3-methylimidazolium-formiat, 1-Ethyl-3-methylimidazolium-octanoat, 1,3-Diethylimidazolium-acetat und 1-Ethyl-3-methylimidazolium-propionat.

Es ist vorteilhaft, wenn der Führungskörper eine in Längsrichtung des Führungskörper verlaufende Nut aufweist und/oder dass das Ventilgehäuse eine von einer Auslassöffnung in Richtung der Einlassöffnung verlaufende Nut aufweist. Insbesondere verläuft die Nut in Verschieberichtung des Führungskörpers. Über diese Nut kann beim Anfahren eine Druckentlastung erzielt werden.

Es ist bevorzugt, wenn der Absperrvorsprung an einer Grundfläche des Führungskörpers angeordnet ist und wenn die Nut zur Grundfläche verläuft.

In einer bevorzugten Ausführungsform weist die Nut einen in Längsrichtung des Führungskörpers in Richtung des Absperrvorsprungs stetig zunehmenden bzw. von der einen Auslassöffnung in Richtung der Einlassöffnung stetig abnehmenden Querschnitt auf. Hierdurch wird eine sanftere Druckentlastung erzielt.

Es ist vorteilhaft, wenn zumindest zwei, vorzugsweise zumindest drei, Auslassöffnungen vorgesehen sind, wobei die Auslassöffnungen insbesondere in einer Ebene senkrecht zur Längsachse des Hohlraums angeordnet sind.

Gemäß einer bevorzugten Ausführungsform weist der Absperrvorsprung eine gekrümmte Anliegefläche zum Anliegen an mindestens einer der Auslassöffnungen auf. Vorteilhafterweise weist die Anliegefläche dieselbe Krümmung wie mindestens eine der Auslassöffnungen auf, sodass die Anliegefläche im Wesentlichen dicht an der gekrümmten Auslassöffnung anliegen kann, um die Auslassöffnung abzudecken und somit diese abzusperren. Besonders bevorzugt ist die gekrümmte Anliegefläche einfach gekrümmt mit einem konstanten Krümmungsradius, sodass bei einer Drehung des Absperrelements die Anliegefläche in konstantem Abstand (insbesondere anliegend) an der Auslassöffnung vorbei bewegt wird. Eine beispielhafte Krümmung einer Auslassöffnung folgt beispielsweise durch eine Ausnehmung aus einer Begrenzungswand des Hohlraums, welcher z.B. ein Zylinder sein kann.

Um das Absperrelement in dem Hohlraum zu bewegen ist es günstig, wenn das Ventil einen Antrieb zum Bewegen, insbesondere zum Drehen und/oder linearen Bewegen, des Absperrelements aufweist. Dadurch ist ein automatisches Bewegen des Absperrelements möglich. Vorteilhafterweise wird das Absperrelement mithilfe des Antriebs stufenlos bewegt, um mindestens eine der Auslassöffnungen stufenlos abzusperren. Vorteilhafterweise kann mit dem Antrieb das Absperrelement in jeweils zumindest eine Stellung gebracht werden, in der eine Auslassöffnung (insbesondere vollständig) abgesperrt ist.

Gemäß einer bevorzugten Ausführungsform ist der Führungskörper des Absperrelements im Wesentlichen zylinderförmig, wobei der zumindest eine Absperrvorsprung an einer Grundfläche des im Wesentlichen zylinderförmigen Führungskörpers angeordnet ist. Dabei erstreckt sich der Absperrvorsprung in Richtung der Längsachse des Führungskörpers. Dadurch ist eine einfache Herstellung des Absperrelements möglich. Vorteilhafterweise kann das Absperrelement in dem Hohlraum des Ventilgehäuses gedreht werden. Durch die Drehung des Absperrelements kann der Absperrvorsprung radial in dem Hohlraum bewegt (gedreht) werden, sodass der Absperrvorsprung zu mindestens einer der Auslassöffnungen bewegt und somit diese abdecken und absperren kann, sowie durch die Drehbewegung sich von der Auslassöffnung wegbewegen und dadurch diese freigeben und öffnen kann. Vorzugsweise kann das Absperrelement in zumindest eine Stellung je Auslassöffnung gebracht werden, in der die jeweilige Auslassöffnung abgesperrt ist.

Gemäß einer besonders bevorzugten Ausführungsform ist der Hohlraum zylinderförmig, wobei die Längsachse des zylinderförmigen Hohlraums mit der Längsachse des im Wesentlichen zylinderförmigen Führungskörpers des Absperrelements zusammenfällt. Dadurch ist eine optimale Aufnahme des Absperrelements in dem Hohlraum des Ventilgehäuses möglich.

Gemäß einer besonders bevorzugten Ausführungsform weist das Absperrelement in dem Hohlraum eine Toleranz auf, sodass in dem Hohlraum zwischen dem Führungskörper des Absperrelements und dem Ventilgehäuse ein Spalt ausgebildet ist, durch den Fluid strömen kann. Dadurch kann eine dauerhafte Ablagerung des Fluids in dem Ventil reduziert oder sogar vermieden werden. Durch den Spalt kann ein definierter Fluidstrom den Führungskörper des Absperrelements umströmen, sodass kein Totraum in dem Hohlraum gebildet wird, in dem Fluid sich ablagern kann. Durch die Totraumfreiheit sind lange Verweilzeiten des Fluids in dem erfindungsgemäßen Ventil unterbunden. Vorteilhafterweise ist der Absperrvorsprung derart ausgestaltet, dass dieser bei Anströmung und Umlenkung eines Fluids keinen Totraum ausbildet und eine optimale Weiterleitung des Fluids ermöglicht.

Gemäß einer weiteren besonders bevorzugten Ausführungsform ist zwischen dem Führungskörper des Absperrelements und dem Hohlraum eine Dichtung angeordnet, die das Absperrelement gegenüber dem Ventilgehäuse abdichtet. Dies hat den Vorteil, dass eine vollkommene Dichtheit des Absperrelements möglich ist.

Zum einfachen Anschluss des Ventils an Rohrleitungen ist es günstig, wenn das Ventilgehäuse einen oder mehrere weitere Hohlräume aufweist, die über jeweils eine der Auslassöffnungen mit dem Hohlraum verbunden sind. Dabei sind die eine oder mehreren Auslassöffnungen Öffnungen, die an einer oder mehreren inneren Flächen des Ventilgehäuses angeordnet sind, die an den Hohlraum angrenzen. Somit sind die Auslassöffnungen direkt an dem Hohlraum angeordnet. Dadurch kann ein über die zumindest eine Einlassöffnung in den Hohlraum strömendes Fluid über die vom Absperrvorsprung nicht abgesperrten Auslassöffnungen ausströmen und auf diese verteilt werden, sodass das erfindungsgemäße Ventil bevorzugt als Verteilerventil verwendet werden kann. Gemäß einer bevorzugten Ausführungsform sind der eine oder die mehreren weiteren Hohlräume zylinderförmig. Der eine Absperrvorsprung oder die Absperrvorsprünge blockieren eine oder mehrere Auslassöffnungen, teilweise oder vollständig. Durch Verschieben der Absperrvorsprünge können andere Auslassöffnungen blockiert werden (z.B. durch Drehbewegung), sodass eine andere Verteilung des durch den Hohlraum strömenden Fluids zu anderen Auslassöffnungen - auch ohne Unterbrechung des Fluidstromes durch den Einlass während des Betriebes - möglich ist.

Weiters ist es günstig, wenn eine Einlassöffnung an einer Grundfläche des zylinderförmigen Hohlraums angeordnet ist, insbesondere deckungsgleich mit einer Grundfläche des zylinderförmigen Hohlraums ist (wobei bevorzugt zumindest eine, besonders bevorzugt zumindest zwei, noch mehr bevorzugt zumindest drei, der Auslassöffnungen an einer von der Grundfläche abstehenden Mantelfläche des Hohlraums angeordnet sind). Dabei ist die Einlassöffnung vorzugsweise in Längsrichtung des im Wesentlichen zylinderförmigen Führungskörpers des Absperrelements angeordnet. Vorteilhafterweise ist das Absperrelement derart in dem Hohlraum angeordnet, dass der zumindest eine Absperrvorsprung auf der der Einlassöffnung zugewandten Grundfläche des Führungskörpers angeordnet ist. Dadurch kann das Fluid besser von der Einlassöffnung in den Hohlraum einströmen.

Gemäß einer bevorzugten Ausführungsform ist der Hohlraum eine das Ventilgehäuse durchbrechende zylinderförmige Bohrung, wobei die Bohrung auf zwei gegenüberliegenden Seiten des Ventilgehäuses einen ersten und einen zweiten Durchbruch bildet. Dadurch ist eine einfache und kostengünstige Herstellung des Ventilgehäuses möglich, indem der Hohlraum durch eine Bohrung hergestellt wird. Das Absperrelement kann somit einfach in dem Hohlraum des Ventilgehäuses angeordnet und zu Wartungszwecken wieder aus dem Hohlraum entnommen werden.

Gemäß einer besonders bevorzugten Ausführungsform bildet der erste Durchbruch eine Einlassöffnung. Dadurch kann das Fluid über die Einlassöffnung über den ersten Durchbruch in den Hohlraum einströmen und anschließend mithilfe des Absperrelements verteilt werden.

Zur besseren Führung des Absperrelements in dem Hohlraum ist der Durchmesser der Bohrung gleich dem Durchmesser des im Wesentlichen zylinderförmigen Führungskörpers des Absperrelements und der im Wesentlichen zylinderförmige Führungskörper des Absperrelements zumindest teilweise derart in der Bohrung aufgenommen, dass das Absperrelement zumindest teilweise aus dem zweiten Durchbruch herausragt. Alternativ kann der Führungskörper auch mit dem zweiten Durchbruch bündig sein und eine entsprechende Aufnahmevorrichtung zur Bewegung im Inneren des Führungskörpers aufweisen.

Weiters ist es günstig, wenn der Antrieb zum Drehen des Absperrelements um die Längsachse des im Wesentlichen zylinderförmigen Führungskörpers ist, wobei der Antrieb an einem aus dem zweiten Durchbruch herausragenden Ende des Absperrelements eingreift. Dadurch kann das Absperrelement platzsparend teilweise in dem Hohlraum des Ventilgehäuses angeordnet werden.

Es ist möglich, wenn in dem Bereich des zweiten Durchbruchs, in dem der Führungskörper aus dem Ventilgehäuse herausragt, Dichtungsringe, bevorzugt Leckageringe, in einer in den Führungskörper eingefrästen Nut montiert sind. Diese Dichtungsringe sind bevorzugt aus einem flexiblen, gegen das Fluid beständigen Kunststoffring und aus einem Deckring aufgebaut. Besonders bevorzugt sind die Dichtungsringe am Ventilgehäuse in dem Hohlraum an dem zweiten Durchbruch angeordnet, sodass diese den Spalt in dem Hohlraum zwischen dem Ventilgehäuse und dem Führungskörper des Absperrelements gegen Fluidleckage abdichten.

Es ist möglich, den Spalt zwischen Ventilgehäuse und Führungskörper so zu konstruieren, dass ohne Einsatz einer Dichtung durch eine gewählte Passung der Spalt einen gezielten Leckagestrom des Fluidmediums aufweist. Dadurch werden dauerhafte Ablagerungen des Mediums im Spalt unterbunden und eine Totraumfreiheit hergestellt.

Abhängig von der Viskosität des im Ventil transportierten Fluids könnte es Szenarien geben, in denen die Menge des Fluids, die durch den Spalt in dem Hohlraum zwischen dem Ventilgehäuse und dem Führungskörper aus dem Ventilgehäuse austritt, zu groß ist. Besonders bevorzugt können in diesem Fall Dichtungsringe eingesetzt werden und durch Anziehen von Befestigungsschrauben, die die Dichtungsringe am Ventilgehäuse befestigen, diese nach innen in den Hohlraum in Richtung des Führungskörpers ausgebeult werden, sodass der Fluidstrom in dem Spalt in dem Hohlraum zwischen dem Führungskörper und dem Ventilgehäuse reduziert wird. Dadurch lässt sich der Leckagestrom auf ein gewünschtes Maß einstellen.

Gemäß einer bevorzugten Ausführungsform weist das Ventilgehäuse mindestens zwei Auslassöffnungen auf und die mindestens zwei Auslassöffnungen sind in einer Ebene senkrecht zur Längsachse des Hohlraums angeordnet. Vorteilhafterweise können dadurch durch Drehen des Absperrelements Auslassöffnungen abgesperrt werden. Vorzugsweise sind Normale auf die Auslassöffnungen orthogonal zu einer Normalen auf die Einlassöffnung.

Gemäß einer weiteren bevorzugten Ausführungsform bildet der zumindest eine Absperrvorsprung eine Verlängerung zumindest eines Teiles der Mantelfläche des im Wesentlichen zylinderförmigen Führungskörpers in Richtung der Längsachse des im Wesentlichen zylinderförmigen Führungskörpers des Absperrelements. Dadurch kann der Absperrvorsprung optimal mindestens eine gekrümmte Auslassöffnung absperren.

Es ist bevorzugt, wenn das Absperrelement eine in eine Verschieberichtung des Absperrelements verlaufende Nut aufweist und/oder das Ventilgehäuse eine von einer Auslassöffnung in Richtung der Einlassöffnung verlaufende Nut aufweist. Hierdurch kann ein Überdruck im Inneren des Ventilgehäuses vermeidet oder verringert werden.

Es ist günstig, wenn zumindest eine, bevorzugt zumindest zwei, besonders bevorzugt zumindest drei, der Auslassöffnungen senkrecht zur zumindest einen Einlassöffnung angeordnet sind. Vorteilhafterweise ist dadurch die Einlassöffnung dauerhaft geöffnet, wobei Auslassöffnungen bevorzugt durch Drehen des Absperrelements abgesperrt werden können. Bevorzugt ist der Absperrvorsprung derart geformt, dass in einer Stellung die Einlassöffnung vollständig oder zu zumindest 50 % geöffnet ist und eine oder mehrere der Auslassöffnungen geöffnet und eine oder mehrere der Auslassöffnungen abgesperrt ist.

Zur einfachen Herstellung des Ventils ist es günstig, wenn das Ventilgehäuse prismenförmig ist. Besonders bevorzugt ist das Ventilgehäuse quaderförmig, wobei die Grundfläche insbesondere quadratisch ist. Vorteilhafterweise können dadurch vier Auslassöffnungen an dem Ventilgehäuse angeordnet werden, wobei bevorzugt an jeder der vier Seiten der Mantelfläche jeweils eine Auslassöffnung angeordnet ist.

Weiters ist es günstig, wenn die zumindest eine Einlassöffnung an mindestens einer Grundfläche und die eine oder mehreren Auslassöffnungen an einer Mantelfläche des prismenförmigen Ventilgehäuses angeordnet sind. Vorteilhafterweise können dadurch die eine oder mehreren Auslassöffnungen einfach abgesperrt werden.

Gemäß einer bevorzugten Ausführungsform weist das Ventilgehäuse mindestens zwei Auslassöffnungen auf und der Absperrvorsprung ist zum Absperren von mindestens zwei, bevorzugt genau zwei, der Auslassöffnungen geeignet. Dadurch können vorteilhafterweise zwei Auslassöffnungen gleichzeitig mithilfe eines Absperrvorsprungs abgesperrt werden. Es kann jedoch der Absperrvorsprung auch zum Absperren von drei, vier, fünf oder mehr Auslassöffnungen ausgestaltet sein. Zum Absperren von zwei benachbarten Auslassöffnungen bei vier Auslassöffnungen des Ventilgehäuses bildet der Absperrvorsprung bevorzugt eine L-förmige Zunge aus, die eine gedachte Verlängerung von 180° der Mantelfläche des im Wesentlichen zylinderförmigen Führungskörpers ausbildet. Beispielsweise ist der Absperrvorsprung zum Absperren von m benachbarten Auslassöffnungen eines (vorzugsweise prismenförmigen) Ventilgehäuses mit n Seiten und je einer Auslassöffnung an jeder Seite des Mantels des (vorzugsweise prismenförmigen) Ventilgehäuses, wobei der Absperrvorsprung einen Winkel von m/n*360° abdeckt.

Gemäß einer weiteren bevorzugten Ausführungsform weist das Ventilgehäuse mindestens zwei Auslassöffnungen auf und das Absperrelement zwei Absperrvorsprünge zum Absperren von mindestens zwei, bevorzugt genau zwei, der Auslassöffnungen auf. Die zwei Absperrvorsprünge sind vorzugsweise voneinander getrennt. Dadurch können bevorzugt zwei Auslassöffnungen von zwei Absperrvorsprüngen abgesperrt werden, wobei die Absperrvorsprünge beispielsweise bei einem prismenförmigen Ventilgehäuse mit rechteckiger Grundfläche und vier Auslassöffnungen um 90° oder 180° versetzt zueinander ausgerichtet sein können. Es können bei einem prismenförmigen Ventilgehäuse mit rechteckiger Grundfläche jedoch auch drei Absperrvorsprünge vorgesehen sein, die beispielsweise jeweils um 90° zueinander versetzt angeordnet und zum Absperren von drei Auslassöffnungen sind. Zur einfacheren Fertigung kann es von Vorteil sein, benachbarte Absperrvorsprünge miteinander zu verbinden, und so einen Absperrvorsprung zu erzeugen, der zum Beispiel 270° absperrt. Zum Absperren von zwei gegenüberliegenden Auslassöffnungen bei vier Auslassöffnungen des Ventilgehäuses bilden die Absperrvorsprünge bevorzugt jeweils eine Zunge aus, die jeweils eine gedachte Verlängerung von 90° der Mantelfläche des im Wesentlichen zylinderförmigen Führungskörpers ausbilden. Bei Ventilgehäusen, die andere Formen aufweisen, können die Auslassöffnungen um einen anderen Winkel zueinander versetzt sein. Beispielsweise können bei einem Ventilgehäuse, das die Form eines dreieckigen Prismas und drei Auslassöffnungen aufweist, die Auslassöffnungen um 120° zueinander versetzt sein. Ventilgehäuse, die die Form eines sechseckigen Prismas aufweisen, können beispielsweise sechs Auslassöffnungen aufweisen, die um 60° zueinander versetzt sind. Bei einem prismenförmigen Ventilgehäuse mit n Seiten und je einer Auslassöffnung an jeder Seite des Mantels des Prismas decken die ein oder mehreren Absperrvorsprünge bei m gleichzeitig abzusperrende Auslassöffnungen insgesamt einen Winkel von m/n*360° ab.

Zur Regelung der Temperatur des Ventils ist es günstig, wenn das Ventilgehäuse eine Heizung und/oder eine Kühlung aufweist. Bevorzugt weist das Ventilgehäuse Kanäle zum Transportieren eines Heiz- und/oder Kühlmediums auf.

Gemäß einer bevorzugten Ausführungsform weist das Ventilgehäuse an mindestens einer der Auslassöffnungen eine Nut auf. Dadurch kann ein Überdruck in dem Ventilgehäuse vermieden werden, indem Fluid von der Einlassöffnung über die Nut zur Auslassöffnung strömen kann.

Gemäß einer weiteren bevorzugten Ausführungsform weist das Absperrelement eine Nut auf. Dadurch kann ebenfalls ein Überdruck in dem Ventilgehäuse vermieden werden, indem Fluid von der Einlassöffnung über die Nut zur Auslassöffnung strömen kann.

Gemäß einer besonders bevorzugten Ausführungsform ist die Nut des Ventilgehäuses und/oder die Nut des Absperrelements eine Kerbe, wobei die Kerbe insbesondere einen dreieckigen oder parabelförmigen Querschnitt aufweist. Die Nut des Ventilgehäuses und/oder die Nut des Absperrelements ist bevorzugt zwischen 1 mm und 30 mm, besonders bevorzugt zwischen 3 mm und 20 mm lang.

Es ist günstig, wenn das Absperrelement des Ventils regelmäßig zur Spülung eines Spalts in dem Hohlraum zwischen dem Ventilgehäuse und dem Führungskörper des Absperrelements oszilliert.

Dadurch kann die Spülung des Spalts verbessert und ein Vercracken des Fluids in dem Spalt weiter vermindert werden. Abhängig von der bevorzugten Bewegungsart oszilliert das Absperrelement in einer linearen Bewegung in Richtung der Längsachse des zylinderförmigen Hohlraums oder in einer Drehbewegung axial zum zylinderförmigen Hohlraum. Besonders bevorzugt ist die Amplitude der oszillierenden Bewegung zwischen 3 mm und 20 mm, vorzugsweise, zwischen 5 mm und 10 mm, bei einer linearen Bewegung, oder zwischen ±1° und ±10°, vorzugsweise zwischen ±2° und ±5°, bei einer drehenden Bewegung.

Die Erfindung wird nachstehend anhand in den Zeichnungen gezeigten, nicht einschränkenden Ausführungsbeispielen weiter erläutert.
Fig. 1a zeigt schematisch ein erfindungsgemäßes Ventil mit einem Ventilgehäuse und einem Absperrelement in einer perspektivischen Ansicht;
Fig. 1b zeigt schematisch das Ventil gemäß Fig. 1a in einer Seitenansicht;
Fig. 1c zeigt schematisch einen vertikalen Schnitt durch das Ventil gemäß Fig. 1b;
Fig. 1d zeigt schematisch einen horizontalen Schnitt durch das Ventil gemäß Fig. 1b;
Fig. 2a und 2b zeigen schematisch das Ventilgehäuse des Ventils gemäß Fig. 1a in einer perspektivischen Ansicht bzw. einer Seitenansicht;
Fig. 2c und 2d zeigen schematisch einen vertikalen bzw. einen horizontalen Schnitt durch das Ventilgehäuse gemäß Fig. 2b;
Fig. 3a-d zeigen schematisch das Absperrelement des Ventils gemäß Fig. 1a in einer perspektivischen, einer Vorder-, einer Seitenansicht bzw. einer Draufsicht;
Fig. 4a und 4b zeigen schematisch ein weiteres erfindungsgemäßes Ventil in einer perspektivischen Ansicht bzw. einer Seitenansicht;
Fig. 4c und 4d zeigen schematisch einen vertikalen bzw. einen horizontalen Schnitt durch das Ventil gemäß Fig. 4b;
Fig. 5a-d zeigen schematisch das Absperrelement des Ventils gemäß Fig. 4a in einer perspektivischen, einer Vorder-, einer Seitenansicht bzw. einer Draufsicht;
Fig. 6a und 6b zeigen schematisch ein weiteres erfindungsgemäßes Ventil in einer perspektivischen Ansicht bzw. einer Seitenansicht;
Fig. 6c und 6d zeigen schematisch einen vertikalen bzw. einen horizontalen Schnitt durch das Ventil gemäß Fig. 6b;
Fig. 7a und 7b zeigen schematisch das Ventilgehäuse des Ventils gemäß Fig. 6a in einer perspektivischen Ansicht bzw. einer Seitenansicht;
Fig. 7c und 7d zeigen schematisch einen vertikalen bzw. einen horizontalen Schnitt durch das Ventilgehäuse gemäß Fig. 7b;
Fig. 8a und 8b zeigen schematisch ein Ventilgehäuse eines weiteren erfindungsgemäßen Ventils in einer perspektivischen Ansicht bzw. einer Seitenansicht;
Fig. 8c und 8d zeigen schematisch einen vertikalen bzw. einen horizontalen Schnitt durch das Ventilgehäuse gemäß Fig. 8b;
Fig. 9a und 9b zeigen schematisch ein weiteres erfindungsgemäßes Ventil in einer perspektivischen Ansicht bzw. einer Seitenansicht;
Fig. 9c und 9d zeigen schematisch einen vertikalen bzw. einen horizontalen Schnitt durch das Ventil gemäß Fig. 9b;
Fig. 10a-d zeigen schematisch das Absperrelement des Ventils gemäß Fig. 9a in einer perspektivischen, einer Vorder-, einer Seitenansicht bzw. einer Draufsicht;
Fig. 11a und 11b zeigen schematisch ein weiteres erfindungsgemäßes Ventil in einer perspektivischen Ansicht bzw. einer Seitenansicht;
Fig. 11c und 11d zeigen schematisch einen vertikalen bzw. einen horizontalen Schnitt durch das Ventil gemäß Fig. 11b;
Fig. 12a-d zeigen schematisch das Absperrelement des Ventils gemäß Fig. 11a in einer perspektivischen, einer Vorder-, einer Seitenansicht bzw. einer Draufsicht;
Fig. 13a-d zeigen schematisch ein Absperrelement eines weiteren erfindungsgemäßen Ventils in einer perspektivischen, einer Vorder-, einer Seitenansicht bzw. einer Draufsicht;
Fig. 14a und 14b zeigen schematisch ein weiteres erfindungsgemäßes Ventil in einer perspektivischen Ansicht bzw. einer Seitenansicht;
Fig. 14c und 14d zeigen schematisch einen vertikalen bzw. einen horizontalen Schnitt durch das Ventil gemäß Fig. 14b;
Fig. 15a und 15b zeigt schematisch eine Ventilanordnung mit einem Ventil gemäß Fig. 9 und zwei Ventilen gemäß Fig. 14a;
Fig. 16a zeigt schematisch ein weiteres erfindungsgemäßes Ventil mit einem Ventilgehäuse und einem Absperrelement in einem abgesperrten Zustand;
Fig. 16b zeigt schematisch das Ventil gemäß Fig. 16a in einem geöffneten Zustand;
Fig. 17a zeigt schematisch einen Schnitt eines weiteren erfindungsgemäßen Ventils;
Fig. 17b zeigt schematisch einen Schnitt eines weiteren erfindungsgemäßen Ventils;
Fig. 18a und b zeigen schematisch das Absperrelement des Ventils gemäß Fig. 17a in einer Draufsicht bzw. einer perspektivischen Ansicht;
Fig. 19a und b zeigen schematisch ein Absperrelement eines weiteren erfindungsgemäßen Ventils in einer Draufsicht bzw. einer perspektivischen Ansicht.

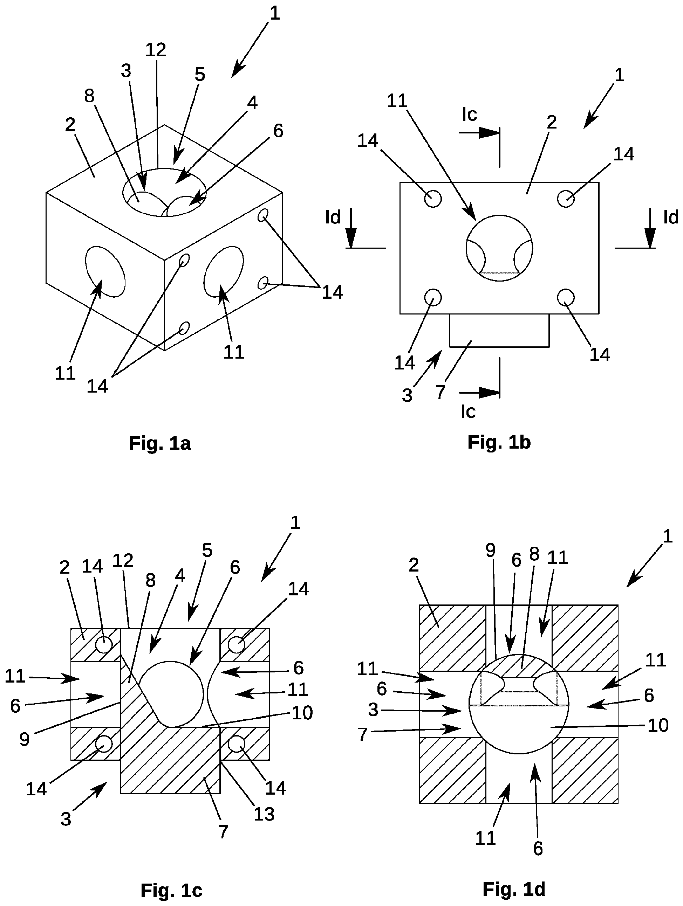

Fig. 1a-d zeigen ein erfindungsgemäßes Ventil 1 mit einem Ventilgehäuse 2 und einem Absperrelement 3, wobei das Ventilgehäuse 2 einen Hohlraum 4 zum Aufnehmen des Absperrelements 3, eine Einlassöffnung 5 zum Einströmen eines Fluids in den Hohlraum 4 und vier Auslassöffnungen 6 zum Ausströmen des Fluids aus dem Hohlraum 4 aufweist. Das Ventilgehäuse 2 ist prismenförmig, wobei die Grundfläche des Prismas ein Quadrat ist. Der Hohlraum 4 des Ventilgehäuses 2 ist eine das Ventilgehäuse 2 durchbrechende zylinderförmige Bohrung, wobei die Bohrung auf zwei gegenüberliegenden Seiten des Ventilgehäuses 2, die die quadratische Grund- und die quadratische Deckfläche des prismenförmigen Ventilgehäuses 2 bilden, einen ersten 12 und einen zweiten 13 Durchbruch bildet. Dabei bildet der erste Durchbruch 12 die Einlassöffnung 5 des Ventilgehäuses 1, sodass die Einlassöffnung 5 deckungsgleich mit einer Grundfläche des zylinderförmigen Hohlraums 4 ist und an der quadratischen Deckfläche des prismenförmigen Ventilgehäuses 2 angeordnet ist. Dadurch ist der erste Durchbruch 12 an der Deckfläche und der zweite Durchbruch 13 an der Grundfläche des prismenförmigen Ventilgehäuses 2 angeordnet. Der Durchmesser der Bohrung, die den Hohlraum 4 bildet und senkrecht zur Grund- und Deckfläche des prismenförmigen Ventilgehäuses 2 angeordnet ist, ist gleich dem Durchmesser des im Wesentlichen zylinderförmigen Führungskörpers 7 des Absperrelements 3. Die Einlassöffnung 5 ist an der Deckfläche angeordnet und die vier Auslassöffnungen 6 jeweils über eine der vier Seiten der Mantelfläche des prismenförmigen Ventilgehäuses 2 zugänglich. Dadurch sind die vier Auslassöffnungen 6 senkrecht zur Einlassöffnung 5 und jeweils um 90° zueinander versetzt angeordnet. Weiters sind die vier Auslassöffnungen 6 in einer Ebene senkrecht zur Längsachse des Hohlraums 4 angeordnet.

Der Führungskörper 7 ist derart in der Bohrung aufgenommen, dass das Absperrelement 3 teilweise aus dem zweiten Durchbruch 13 herausragt. Das Absperrelement 3 weist einen Führungskörper 7 und einen Absperrvorsprung 8 zum Absperren jeweils einer der Auslassöffnungen 6 auf, wobei das Absperrelement 3 beweglich und teilweise in dem Hohlraum 4 des Ventilgehäuses 2 angeordnet ist. Der Absperrvorsprung 8 weist eine gekrümmte Anliegefläche 9 zum Anliegen an den Auslassöffnungen 6 beim Absperren der Auslassöffnungen 6 auf. Der Absperrvorsprung 8 ist so gestaltet, dass er das zu fördernde Medium im Hohlraum 4 totraumfrei umlenken kann. Die Anzahl und Anordnung des zumindest einen Absperrvorsprungs 8 muss dabei der Funktion entsprechend gemeinsam mit dem Ventilgehäuse 2 abgestimmt sein. Wie in Fig. 1d gezeigt, ist der Führungskörper 7 des Absperrelements 3 im Wesentlichen zylinderförmig, wobei der Absperrvorsprung 8 an einer Grundfläche 10 des im Wesentlichen zylinderförmigen Führungskörpers 7 angeordnet ist. Dabei bildet der Absperrvorsprung 8 eine gedachte Verlängerung eines Teiles der Mantelfläche des im Wesentlichen zylinderförmigen Führungskörpers 7 in Richtung der Längsachse des Führungskörpers 7 des Absperrelements 3. Dadurch ist die gekrümmte Anliegefläche 9 die gedachte Verlängerung des Teiles der Mantelfläche des Führungskörpers 7. Der Hohlraum 4 ist zylinderförmig, wobei die Längsachse des zylinderförmigen Hohlraums 4 mit der Längsachse des im Wesentlichen zylinderförmigen Führungskörpers 7 des Absperrelements 3 zusammenfällt.

In der gezeigten Ausführungsform gemäß Fig. 1a-d weist das Ventilgehäuse 2 vier weitere Hohlräume 11 auf, wobei die weiteren Hohlräume 11 zylinderförmig sind und über jeweils eine der Auslassöffnungen 6 mit dem Hohlraum 4 verbunden sind. Dadurch sind die Längsachsen der vier zylinderförmigen weiteren Hohlräume 11 in einer Ebene senkrecht zur Längsachse des zylinderförmigen Hohlraums 4 angeordnet und bilden vier Bohrungen, die jeweils an einer der vier Seiten der Mantelfläche des prismenförmigen Ventilgehäuses 2 angeordnet sind.

Das Ventil 1 weist einen in den Fig. 1a-d nicht gezeigten Antrieb zum Drehen des Absperrelements 3 um die Längsachse des im Wesentlichen zylinderförmigen Führungskörpers 7 auf, wobei der Antrieb an dem aus dem zweiten Durchbruch 13 herausragenden Ende des Absperrelements 3 eingreift.

Wie in Fig. 1d gezeigt, ist der Absperrvorsprung 8 zum Absperren eines der vier Auslassöffnungen 6. Dazu ist die gekrümmte Anliegefläche 9 des Absperrvorsprungs 8 derart ausgestaltet, dass sie durch Drehen des Absperrelements 3 jeweils eine Auslassöffnung 6 abdecken kann, sodass durch die abgedeckte Auslassöffnung 6 kein Fluid strömen kann. Bei weiterem Drehen des Absperrelements 3 um 90° wird die abgesperrte Auslassöffnung 6 wieder geöffnet und die um 90° versetzt angeordnete, benachbarte Auslassöffnung 6 von dem Absperrvorsprung 8 abgesperrt. Dadurch kann je nach Position des Absperrvorsprungs 8 jeweils eine der vier Auslassöffnungen 6 abgesperrt und die anderen drei Auslassöffnungen 6 geöffnet werden. Somit kann das über die Einlassöffnung 5 einströmende Fluid über die drei geöffneten Auslassöffnungen 6 aus dem Ventil 1 ausströmen. Dadurch, dass die Auslassöffnungen 6 jeweils um 90° zueinander versetzt angeordnet sind, deckt der Absperrvorsprung 8, wie in Fig. 1d gezeigt, 90° ab. Durch Drehen des Absperrelements zwischen 0° und 90° kann eine abgesperrte Auslassöffnung 6 stufenlos teilweise geöffnet werden. Dabei wird gleichzeitig eine benachbarte Auslassöffnung 6 stufenlos teilweise geschlossen. Weiters können durch eine lineare Bewegung des Absperrelements 3 in Richtung der Längsachse des zylinderförmigen Hohlraums 4 aus dem zweiten Durchbruch 13 heraus sämtliche Auslassöffnungen 6 geöffnet werden. Bei einer linearen Bewegung des Absperrelements 3 in die entgegengesetzte Richtung, nämlich in Richtung der Einlassöffnung 5, können sämtliche Auslassöffnungen 6 abgesperrt werden, indem der Führungskörper 7 die vier Auslassöffnungen 6 abdeckt und somit absperrt.

Wie in den Fig. 1a-d gezeigt, weist das Ventilgehäuse 2 Heiz- und/oder Kühlkanäle 14 zum Führen eines Heiz- und/oder Kühlmediums auf. Mithilfe des Heiz- und/oder Kühlmediums kann das Ventil 1 und in weiterer Folge das durch das Ventil 1 strömende Fluid aufgeheizt oder abgekühlt werden. Als Heiz- und/oder Kühlmedium können folgende Fluide verwendet werden:
- wässrige Heiz- oder Kühlmedien, zum Beispiel Wasser oder Wasser-Alkohol-Mischungen wie zum Beispiel Glykole
- Thermalöle wie zum Beispiel Mineralöle, wie zum Beispiel Dieselöle
- Luft als Kühlmedium
- Wasserdampf als Heizmedium
- alle anderen Flüssigkeiten oder Gase die für den Anwendungsfall und die Prozessbedingungen geeignet sind.

Weiteres kann eine Beheizung auch elektrisch, zum Beispiel mit Heizschale oder Heizband, ausgeführt werden.

Die Temperierung kann dabei je nach Anwendungsfall im Bereich zwischen 0 und 350 °C, bevorzugt zwischen 60 und 170 °C, besonders bevorzugt zwischen 80 und 120 °C, stattfinden. Um Dichtungstoträume zu vermeiden, wird das im Wesentlichen zylinderförmige Absperrelement 3 mit einer definierten Toleranz passend des zylinderförmigen Hohlraums 4 ausgeführt. Optimiert auf das Fördermedium und den Betriebszustand des Ventils 1 (Fluiddruck, Temperatur) kann ein definierter Spalt zwischen dem Absperrelement 3 und dem Ventilgehäuse 2 erzeugt werden, der eine definierte Durchströmung entlang des Absperrelements 3 zur Folge hat. Durch diese Durchströmung wird der Spalt regelmäßig gespült und eine dauerhafte Materialablagerung im Ventilgehäuse 2 verhindert und damit eine Totraumfreiheit gewährleistet. Die Fluid-Durchströmung kann durch eine Anpressdichtung außen an der Grundfläche des Ventilgehäuses 2 reguliert werden. Durch eine regelmäßig wiederkehrende, oszillierende, lineare Bewegung des Absperrelements 3 in Richtung der Längsachse des zylinderförmigen Hohlraums 4 in Richtung der Einlassöffnung 5 kann eine Spülung des Spalts in dem Hohlraum 4 zwischen dem Ventilgehäuse 2 und dem Führungskörper 7 des Absperrelements verbessert und ein Vercrackens des Fluids in dem Spalt weiter vermindert werden.

Das erfindungsgemäße Ventil 1 kann beispielsweise im Herstellungsprozess einer Cellulose/Aminoxidlösung verwendet werden. Durch die Ausgestaltung des Absperrelements 3 wird verhindert, dass sich in Anlagentoträumen Spinnmasse ansammeln und zersetzen kann. Auch bei längeren Lagerungen von Spinnmasse im Ventil 1 kann sich das Absperrelement 3 im Ventilgehäuse 2 nicht festfressen, da das Absperrelement 3 periodisch in Rotation versetzt und gespült werden kann. Somit stellt die vorliegende Erfindung auch ein Verfahren zum Transport einer Lösung von Cellulose in einem wässrigen tertiären Aminoxid durch ein Ventil 1 dar, bei dem die Fließgeschwindigkeit der Celluloselösung in dem Ventilgehäuse 2 periodisch eingestellt und variiert werden kann, um zu gewährleisten, dass ein sicheres Ableiten, Verteilen und der sichere Transport der Cellulose/Aminoxid Lösung ermöglicht wird.

Für die Fertigung des Absperrelements 3 und des Ventilgehäuses 2 können dabei unter anderem folgenden Materialien verwendet werden, wobei das Absperrelement 3 und das Ventilgehäuse 2 unterschiedliche Materialien aufweisen können:
- Stähle, Werkzeugstahl, unlegierte Stähle, Chrom Nickelstähle wie nichtrostende Stähle nach DIN EN 10088-3, zum Beispiel X5CrNi18-10 (1.4301) oder
- Aluminium, zum Beispiel aushärtbare Aluminium-Magnesium-Silicium-Legierungen, zum Beispiel EN AW-6060 oder
- Kunststoffe, zum Beispiel Thermoplaste, zum Beispiel PTFE oder
- alle anderen formstabilen Werkstoffe, die den geforderten Prozessbedingungen standhalten.

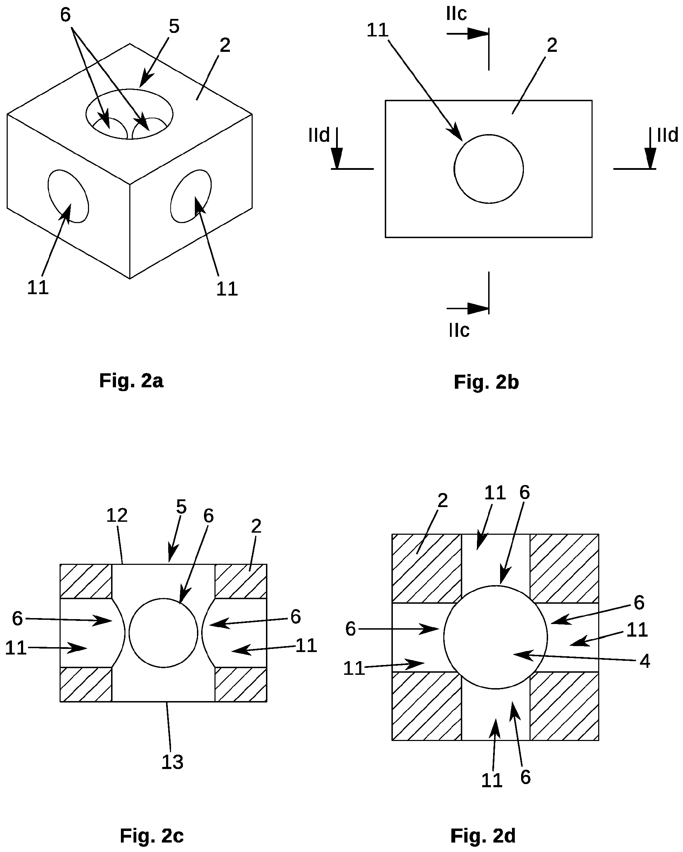

Fig. 2a-d zeigen das Ventilgehäuse 2 gemäß der Ausführungsform gemäß Fig. 1a-d ohne die Heiz- und/oder Kühlkanäle 14. Die vier Auslassöffnungen 6 und vier zylinderförmigen weiteren Hohlräume 11 können durch zwei senkrecht zueinander durchgeführte Bohrungen hergestellt werden, indem das Ventilgehäuse 2 an zwei senkrecht zueinanderstehenden Seiten des Mantels des prismenförmigen Ventilgehäuses 2 durchbohrt wird. Dadurch entsteht ein kreuzförmiger Hohlraum. Senkrecht auf dieses Kreuz kann durch eine weitere Bohrung der Hohlraum 4 und die Einlassöffnung 5 sowie der erste 12 und zweite 13 Durchbruch hergestellt werden.

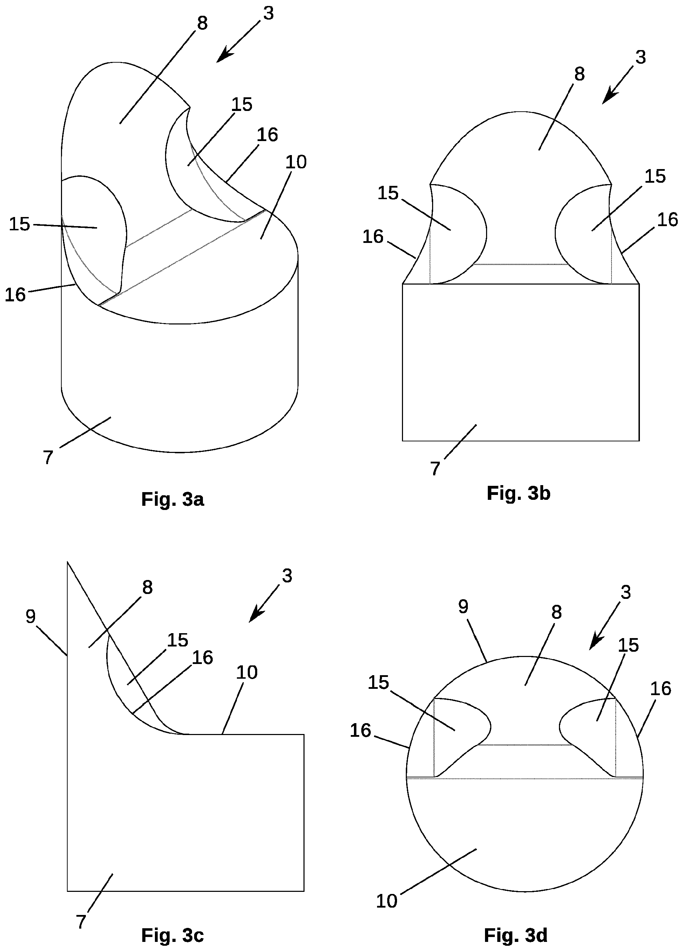

In Fig. 3a-d ist das Absperrelement 3 gemäß der in Fig. 1a-d gezeigten Ausführungsform des erfindungsgemäßen Ventils 1 gezeigt. Dieses Absperrelement 3 kann auch in Verbindung mit anderen als der in Fig. 1a-d gezeigten Ausführungsform des Ventils 1 verwendet werden. Der Führungskörper 7 des Absperrelements 3 ist im Wesentlichen zylinderförmig, wobei an der im Wesentlichen kreisförmigen Grundfläche 10 des im Wesentlichen zylinderförmigen Führungskörpers 7 der Absperrvorsprung 8 angeordnet ist. Der Absperrvorsprung 8 bildet eine gedachte Verlängerung eines Teiles der Mantelfläche des im Wesentlichen zylinderförmigen Führungskörpers 7 in Richtung der Längsachse des Führungskörpers 7 senkrecht zur im Wesentlichen kreisförmigen Grundfläche 10. Wie in Fig. 3a-d gezeigt, wird der Absperrvorsprung 8 im Wesentlichen von der Verlängerung der Mantelfläche des zylinderförmigen Führungskörpers 7 und einer Begrenzungsebene begrenzt, die durch den Mittelpunkt der im Wesentlichen kreisförmigen Grundfläche 10 verläuft und diese Grundfläche 10 teilt, z. B. halbiert, und mit der Längsachse des zylinderförmigen Führungskörpers 7 einen Winkel α einschließt, der dem Verhältnis der Grundfläche 7 (D1) und der Öffnung 11 (D2) proportional ist: *αf*(*D*2/*D*1)*.* Weiters weist der Absperrvorsprung 8 zwei Ausnehmungen 15 auf, die an zwei gegenüberliegenden Seiten des Absperrvorsprungs 8 angeordnet sind und von der Begrenzungsebene, der Grundfläche 10 und der Verlängerung der Mantelfläche des im Wesentlichen zylinderförmigen Führungskörpers 7 begrenzt sind. Weiters weisen die Ausnehmungen 15 eine kreissegmentförmige Begrenzungslinie 16 auf, die beim Absperren einer Auslassöffnung 6 an der Kontur der zwei zur abgesperrten Auslassöffnung 6 benachbarten Auslassöffnungen 6 anliegen. Die Ausnehmungen 15 dienen einer optimalen Strömung des von der Einlassöffnung 5 zu den Auslassöffnungen 6 strömenden Fluids.

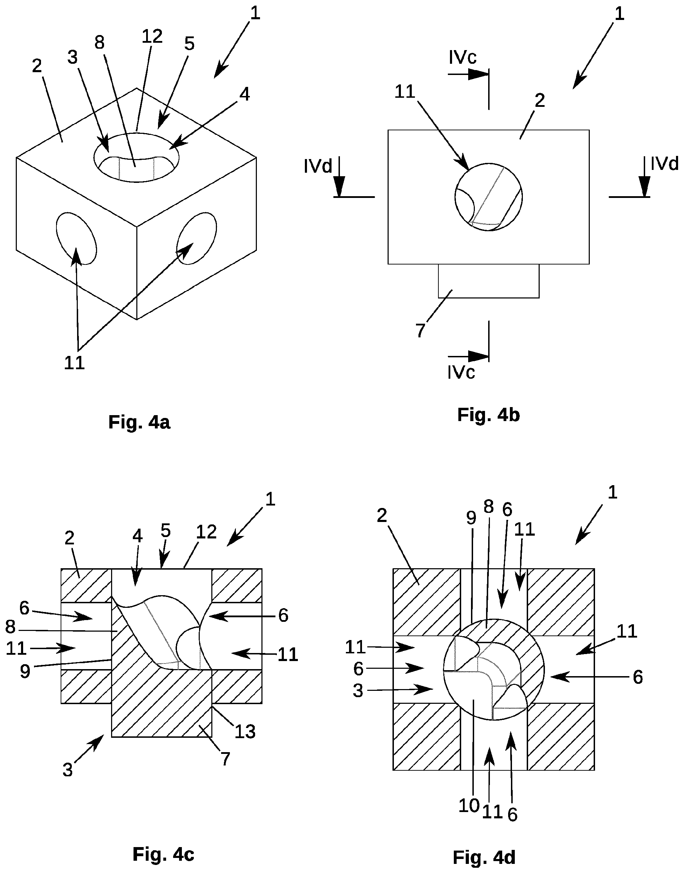

Fig. 4a-d zeigen ein weiteres erfindungsgemäßes Ventil 1 mit einem Ventilgehäuse 2 gemäß Fig. 2a-d und einem Absperrelement 3 zum Absperren von zwei Auslassöffnungen 6. Der Absperrvorsprung 8 deckt dabei einen Winkel von 180° ab, sodass, wie in Fig. 4d gezeigt, mithilfe des Absperrelements 3 zwei benachbarte und um 90° zueinander angeordnete Auslassöffnungen 6 gleichzeitig abgesperrt werden können. Dadurch sind die zwei weiteren der insgesamt vier Auslassöffnungen 6, die ebenfalls benachbart und um 90° zueinander angeordnet sind, geöffnet, sodass Fluid durch diese zwei Auslassöffnungen 6 aus dem Ventil 1 strömen kann.

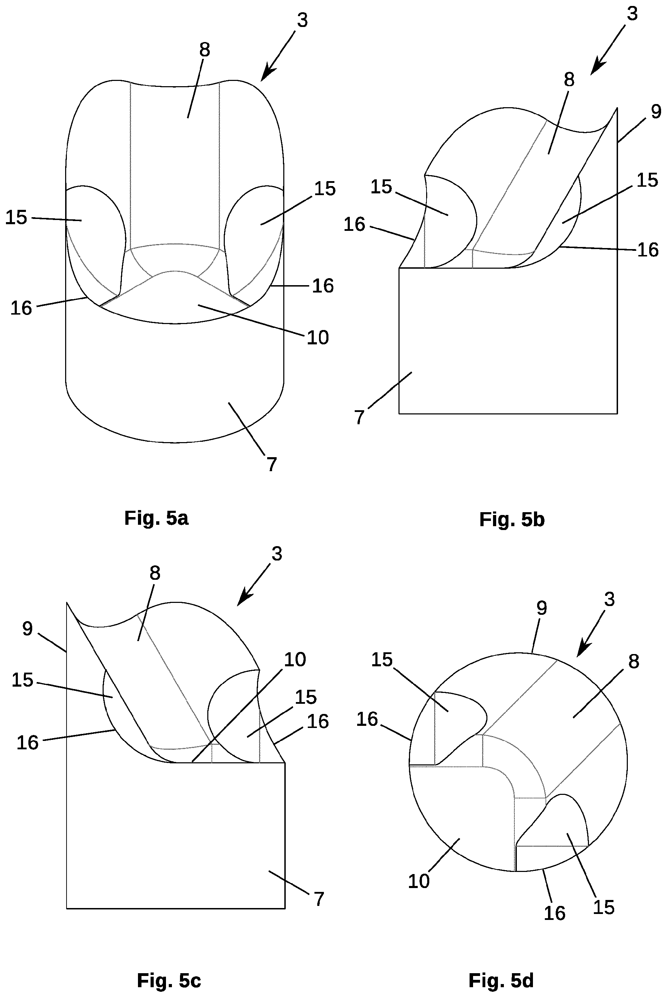

Fig. 5a-d zeigen das Absperrelement 3 des Ventils 1 gemäß Fig. 4a-d. Der Absperrvorsprung 8 deckt drei Viertel der im Wesentlichen kreisförmigen Grundfläche 10 des im Wesentlichen zylinderförmigen Führungskörpers 7 ab. An die im Wesentlichen kreisförmige Grundfläche 10 grenzen die zwei Ausnehmungen 15 des Absperrvorsprungs 8 an, sodass die Ausnehmungen 15 um 90° zueinander versetzt sind. Die Ausnehmungen 15 dienen einer verbesserten Fluidströmung von dem Hohlraum 4 zu den vom Absperrvorsprung 8 nicht abgesperrten und somit geöffneten Auslassöffnungen 6. Mithilfe des Absperrvorsprungs 8 können dadurch bei dem in Fig. 4a-d gezeigten Ventilgehäuse 2 zwei benachbarte und um 90° zueinander versetzte der insgesamt vier Auslassöffnungen 6 abgesperrt werden.

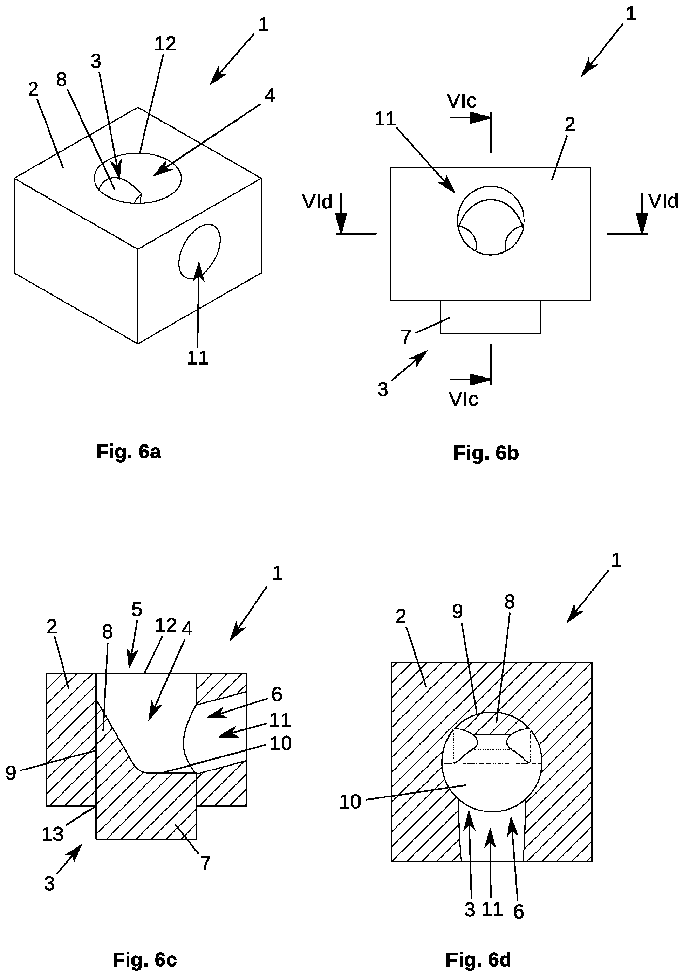

Fig. 6a-d zeigen ein weiteres erfindungsgemäßes Ventil 1 mit dem Absperrelement 3 gemäß Fig. 3a-d. Das Ventilgehäuse 2 ist prismenförmig mit einer quadratischen Grund- und Deckfläche, wobei die Einlassöffnung 5 an der Deckfläche des prismenförmigen Ventilgehäuses 2 angeordnet ist. In der gezeigten Ausführungsform gemäß Fig. 6a-d weist das Ventilgehäuse 2 einen weiteren Hohlraum 11 auf, wobei der weitere Hohlraum 11 die Form eines schiefen Zylinders aufweist und an einer Seite des Mantels des prismenförmigen Ventilgehäuses 2 angeordnet ist. Der weitere Hohlraum 11 ist über eine Auslassöffnung 6 mit dem Hohlraum 4 des Ventilgehäuses 2 verbunden, wobei die Auslassöffnung 6 senkrecht zur Einlassöffnung 5 angeordnet ist. Der weitere Hohlraum 11 kann durch eine Bohrung hergestellt werden, indem das Ventilgehäuse 2 an einer Seite des Mantels des prismenförmigen Ventilgehäuses 2 durchbohrt wird. Durch Drehen des Absperrelements 3 in dem Ventilgehäuse 2 kann die eine Auslassöffnung 6 ganz oder teilweise stufenlos abgesperrt werden. Ausgehend von einer geöffneten Auslassöffnung 6, bei der der Absperrvorsprung 8 auf einer der Auslassöffnung 6 gegenüberliegenden Seite des Hohlraums 4 angeordnet ist, wobei die Auslassöffnung 6 und der Absperrvorsprung 8 in axialer Richtung des zylinderförmigen Hohlraums 4 auf derselben Höhe angeordnet sind, wird das Absperrelement 3 derart gedreht, dass der Absperrvorsprung 8 in Richtung der Auslassöffnung 6 bewegt wird. Sobald der Absperrvorsprung 8 die Auslassöffnung 6 durch die Drehung des Absperrvorsprungs 8 teilweise abdeckt, wird der Querschnitt der Auslassöffnung 6, der nicht von dem Absperrvorsprung 8 abgedeckt und somit geöffnet ist, kleiner, sodass der Fluidstrom durch die Auslassöffnung 6 reduziert wird. Bei weiterer Drehung des Absperrelements 3 wird der freie Querschnitt der Auslassöffnung 6 weiter verkleinert, sodass der Fluidstrom durch die Auslassöffnung 6 weiter reduziert wird. Dadurch ist eine stufenlose Durchflussregelung des Fluidstroms durch die Auslassöffnung 6 aus dem Ventil 1 möglich. Dadurch, dass das Fluid über die Einlassöffnung 5 in den Hohlraum 4 strömt und mithilfe des Absperrelements 3 zur Auslassöffnung 6 weitergeleitet wird, existiert kein Totraum in dem Ventilgehäuse 2. Da der Führungskörper 7 mit Fluid, das in dem Spalt in dem Hohlraum 4 zwischen dem Ventilgehäuse 2 und dem Führungskörper 7 strömt, umspült wird, ist zwischen dem beweglichen Absperrelement 3 und dem statischen Ventilgehäuse 2 kein Totraum vorhanden.

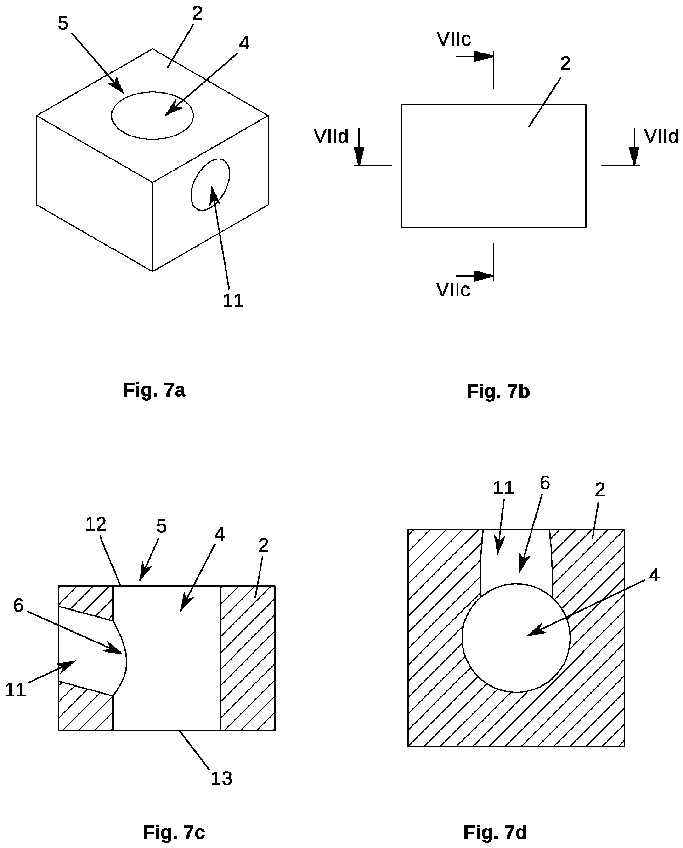

Fig. 7a-d zeigen das Ventilgehäuse 2 des in Fig. 6a-d gezeigten Ausführungsbeispiels des erfindungsgemäßen Ventils 1. Die Längsachse des zylinderförmigen Hohlraums 4 und des schiefen zylinderförmigen weiteren Hohlraums 11 schließen einen Winkel von ungefähr 75° ein.

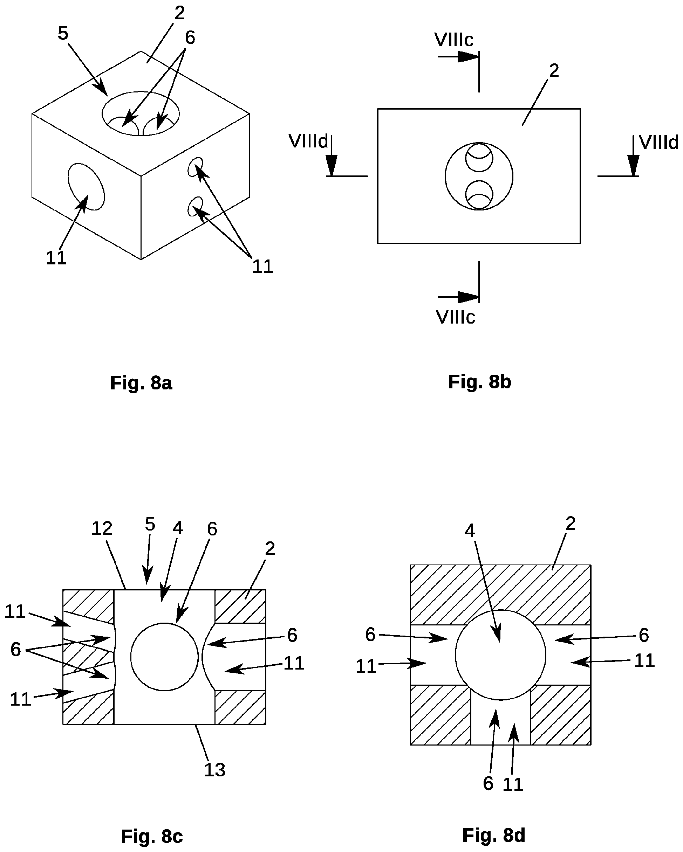

Fig. 8a-d zeigen ein Ventilgehäuse 2 eines weiteren erfindungsgemäßen Ventils. Im Gegensatz zum Ventilgehäuse 2 gemäß der in Fig. 1a-d gezeigten Ausführungsform weist das Ventilgehäuse 2 an einer Seite des Mantels zwei übereinander angeordnete weitere Hohlräume 11 auf, sodass das Ventilgehäuse 2 insgesamt fünf weitere Hohlräume 11 aufweist, die über fünf Auslassöffnungen 6 mit dem Hohlraum 4 des Ventilgehäuses 2 verbunden sind. Durch Drehen des Absperrelements 3 können die beiden übereinander angeordneten Auslassöffnungen 6 gemeinsam abgesperrt oder geöffnet werden. Durch eine lineare Bewegung des Absperrelements 3 in dem Hohlraum 4 kann das eine der beiden übereinander angeordneten Auslassöffnungen 6, das näher an der Einlassöffnung 5 angeordnet ist, geöffnet bleiben, wohingegen das andere abgesperrt werden kann.

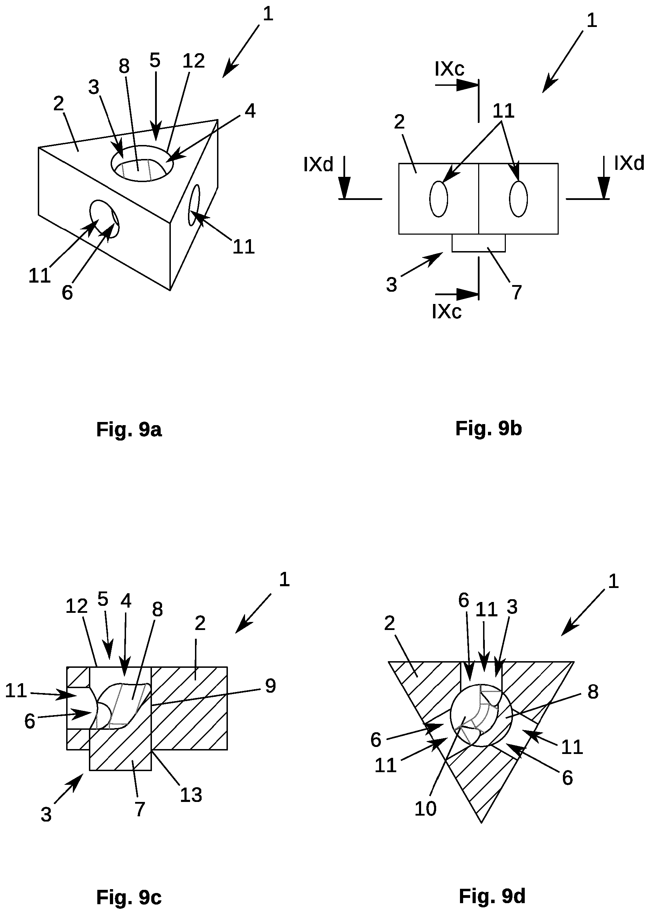

Fig. 9a-d zeigen ein weiteres erfindungsgemäßes Ventil 1, wobei das Ventilgehäuse 2 prismenförmig ist. Die Grund- und die Deckfläche des Prismas weisen die Form eines gleichseitigen Dreiecks auf. Analog zum Ventilgehäuse 2 gemäß der in Fig. 1a-d gezeigten Ausführungsform weist das Ventil 1 drei Auslassöffnungen 6 und drei weitere Hohlräume 11 auf, wobei die weiteren Hohlräume 11 zylinderförmig sind und über jeweils eine der Auslassöffnungen 6 mit dem Hohlraum 4 verbunden sind. Dadurch sind die Längsachsen der drei zylinderförmigen weiteren Hohlräume 11 in einer Ebene senkrecht zur Längsachse des zylinderförmigen Hohlraums 4 angeordnet und bilden drei Bohrungen, die jeweils an einer der drei Seiten der Mantelfläche des prismenförmigen Ventilgehäuses 2 angeordnet sind. Somit schließen die drei Bohrungen jeweils einen Winkel von 120° ein.

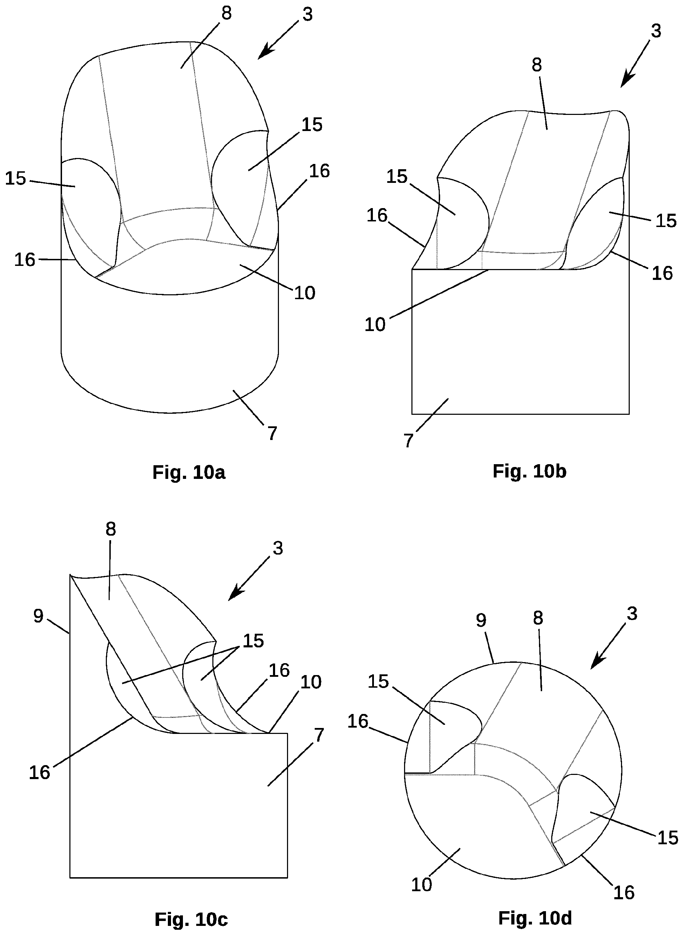

Fig. 10a-d zeigen das Absperrelement 3 des Ventils 1 gemäß Fig. 9a-d. Der Absperrvorsprung 8 deckt zwei Drittel der im Wesentlichen kreisförmigen Grundfläche 10 des im Wesentlichen zylinderförmigen Führungskörpers 7 ab. An die im Wesentlichen kreisförmige Grundfläche 10 grenzen die zwei Ausnehmungen 15 des Absperrvorsprungs 8 an, sodass die Ausnehmungen 15 um 120° zueinander versetzt sind. Dadurch kann eine der drei Auslassöffnungen 6 des Ventilgehäuses 2 gemäß der in Fig. 9a-d gezeigten Ausführungsform abgesperrt werden.

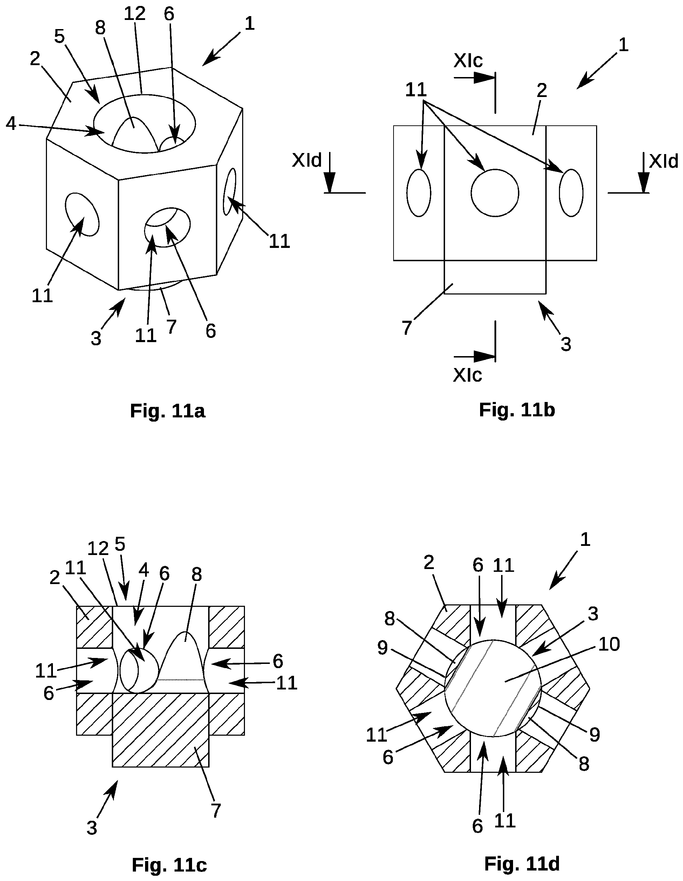

Fig. 11a-d zeigen ein weiteres erfindungsgemäßes Ventil 1, wobei das Ventilgehäuse 2 prismenförmig ist. Die Grund- und die Deckfläche des Prismas weisen die Form eines Sechsecks auf. Analog zum Ventilgehäuse 2 gemäß der in Fig. 1a-d gezeigten Ausführungsform weist das Ventil 1 sechs Auslassöffnungen 6 und sechs weitere Hohlräume 11 auf, wobei die weiteren Hohlräume 11 zylinderförmig sind und über jeweils eine der Auslassöffnungen 6 mit dem Hohlraum 4 verbunden sind. Dadurch sind die Längsachsen der sechs zylinderförmigen weiteren Hohlräume 11 in einer Ebene senkrecht zur Längsachse des zylinderförmigen Hohlraums 4 angeordnet und bilden sechs Bohrungen, die jeweils an einer der sechs Seiten der Mantelfläche des prismenförmigen Ventilgehäuses 2 angeordnet sind. Somit schließen die sechs Bohrungen jeweils einen Winkel von 60° ein. Das Absperrelement 3 gemäß der in Fig. 11a-d gezeigten Ausführungsform weist zwei Absperrvorsprünge 8 auf und dient zum Absperren von zwei gegenüberliegenden Auslassöffnungen 6.

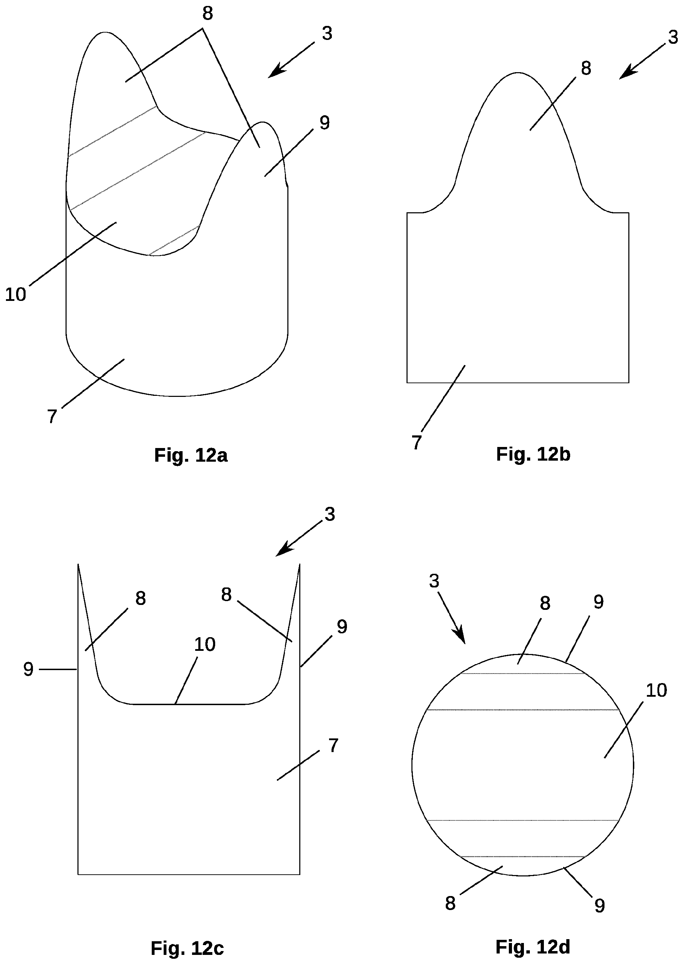

Fig. 12a-d zeigen das Absperrelement 3 des Ventils 1 gemäß Fig. 11a-d. Die beiden Absperrvorsprünge 8 sind an zwei gegenüberliegenden Seiten der im Wesentlichen kreisförmigen Grundfläche 10 des im Wesentlichen zylinderförmigen Führungskörpers 7 angeordnet und weisen jeweils die Form einer Zunge auf. Dabei decken die Absperrvorsprünge 8 jeweils 60° der verlängerten Mantelfläche des Führungskörpers 7 ab, sodass beim prismenförmigen Ventilkörper 2 mit sechseckiger Grundfläche gemäß der in Fig. 11a-d gezeigten Ausführungsform zwei gegenüberliegende Auslassöffnungen 6 abgesperrt werden können.

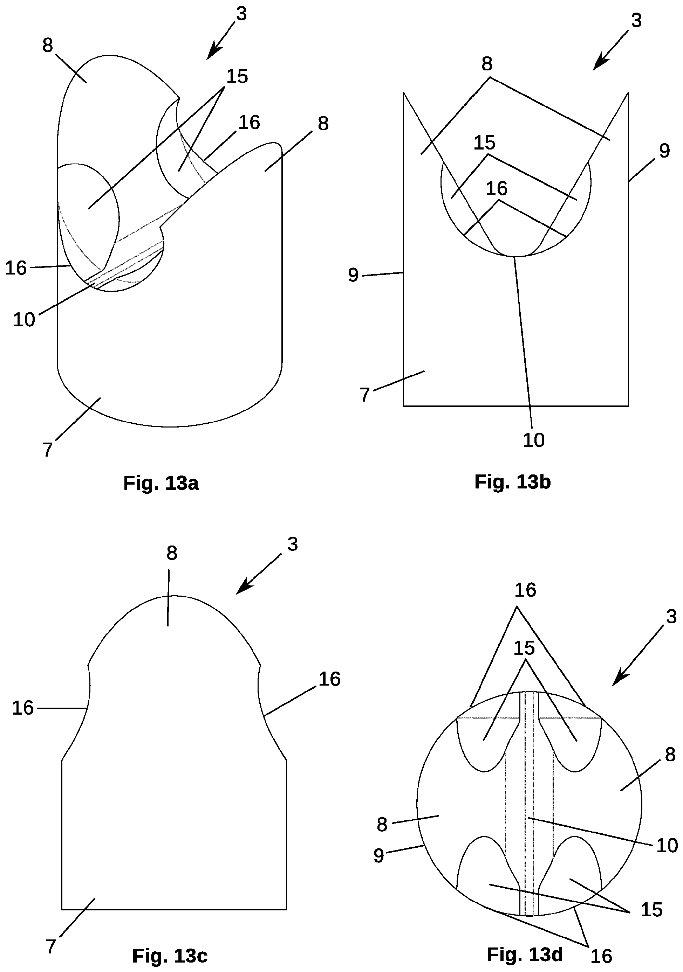

Fig. 13a-d zeigen eine weitere Ausführungsform des erfindungsgemäßen Absperrelements 3, das im Gegensatz zu der in Fig. 3a-d gezeigten Ausführungsform des Absperrelements 3 zwei gleichartige Absperrvorsprünge 8 aufweist. Dabei ist zusätzlich zum Absperrvorsprung 8 des Absperrelements 3 gemäß Fig. 3a-d ein weiterer Absperrvorsprung 8 auf der gegenüberliegenden Seite der im Wesentlichen kreisförmigen Grundfläche 10 angeordnet, sodass der eine Absperrvorsprung 8 eine spiegelbildliche Abbildung des anderen Absperrvorsprungs 8, gespiegelt um die Längsachse des zylinderförmigen Führungskörpers 7, ist.

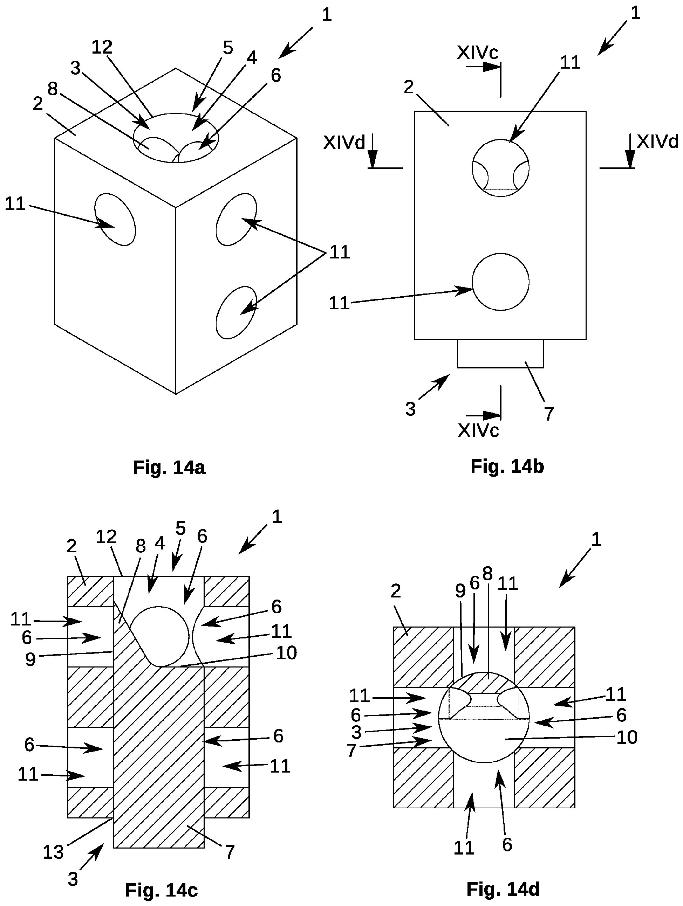

Fig. 14a-d zeigen eine weitere Ausführungsform des erfindungsgemäßen Ventils 1. Das Ventilgehäuse 2 entspricht zwei übereinander angeordneten Ventilgehäusen 2 gemäß der in Fig. 2a-d gezeigten Ausführungsform des Ventilgehäuses 2, wobei das untere der beiden übereinander angeordneten Ventilgehäuse 2 gemäß Fig. 2a-d, das weiter von der Einlassöffnung 5 entfernt ist, drei anstatt vier Auslassöffnungen 6 aufweist. Somit sind an drei Seiten des Mantels des prismenförmigen Ventilgehäuses 2 gemäß Fig. 14a-d zwei in Richtung der Längsachse des zylinderförmigen Hohlraums 4 versetzte weitere Hohlräume 11 und an einer Seite des Mantels ein weiterer Hohlraum 11 angeordnet. Dadurch weist das Ventilgehäuse vier obere und drei untere Auslassöffnungen 6 auf, wobei die oberen Auslassöffnungen 5 näher an der Einlassöffnung 6 angeordnet sind als die unteren Auslassöffnungen 5. Wird das Absperrelement 3 derart in dem Hohlraum 4 positioniert, dass der Absperrvorsprung 8 in gleicher Höhe wie die vier oberen Auslassöffnungen 6 angeordnet ist, sind die drei unteren Auslassöffnungen 6 abgesperrt. Zusätzlich kann eines der vier oberen Auslassöffnungen 6 zumindest teilweise abgesperrt werden. Wird das Absperrelement 3 linear in Richtung des zweiten Durchbruchs 13 bewegt, sodass der Absperrvorsprung 8 in gleicher Höhe wie die drei unteren Auslassöffnungen 6 angeordnet ist, sind die vier oberen Auslassöffnungen 6 geöffnet. Zusätzlich kann eines der drei unteren Auslassöffnungen 6 zumindest teilweise mithilfe des Absperrvorsprungs 8 abgesperrt werden, wobei die anderen zwei unteren Auslassöffnungen geöffnet sind.

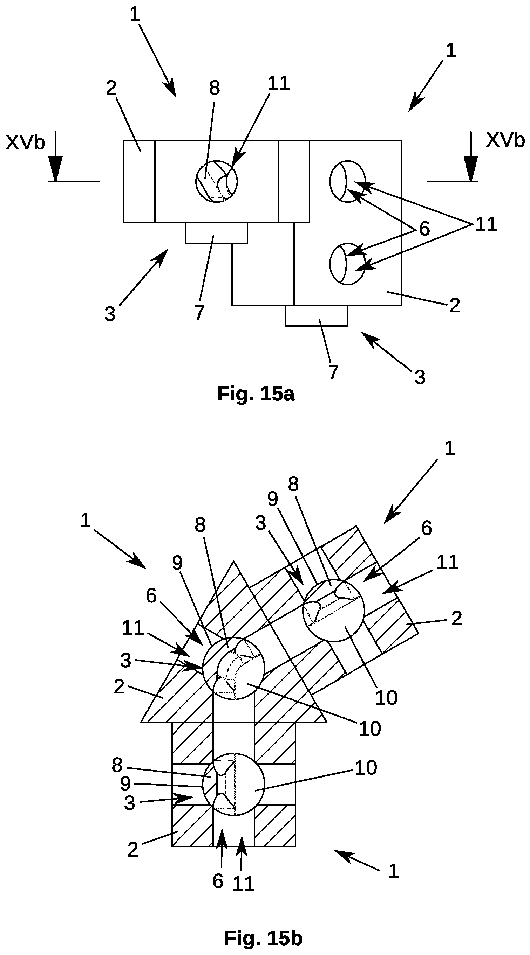

Fig. 15a und 15b zeigen ein erfindungsgemäßes Ventil 1 gemäß der in Fig. 9a-d gezeigten Ausführungsform, an dem an zwei Seiten des Mantels des prismenförmigen Ventilgehäuses 2 jeweils ein Ventil 1 gemäß der in Fig. 14a-d gezeigten Ausführungsform angeordnet sind.

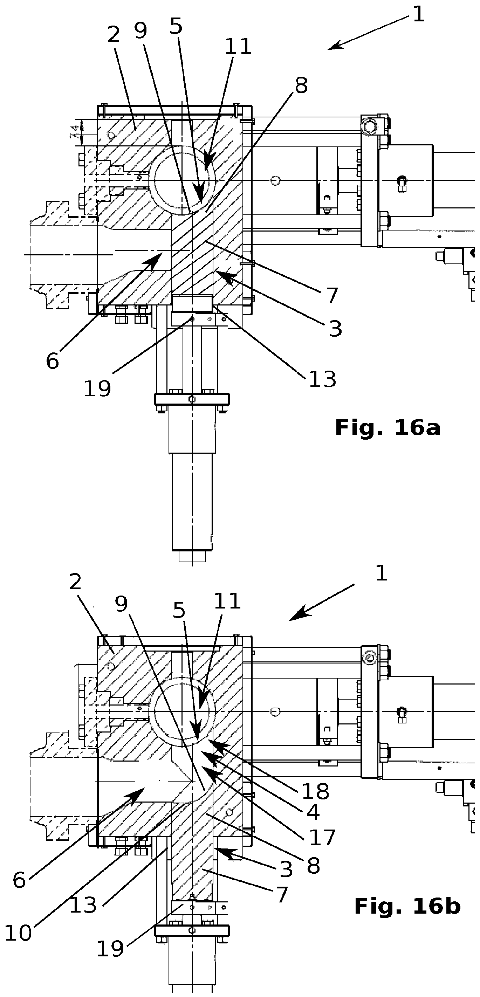

Fig. 16a und 16b zeigen ein weiteres erfindungsgemäßes Ventil 1 mit einem Ventilgehäuse 2 und einem Absperrelement 3, wobei das Ventilgehäuse 2 einen Hohlraum 4 zum Aufnehmen des Absperrelements 3, eine Einlassöffnung 5 zum Einströmen eines Fluids in den Hohlraum 4 und eine Auslassöffnung 6 zum Ausströmen des Fluids aus dem Hohlraum 4 aufweist. Das Absperrelement 3 weist einen Führungskörper 7 und einen Absperrvorsprung 8 zum Absperren der Auslassöffnung 6 auf und ist beweglich in dem Hohlraum 4 des Ventilgehäuses 2 angeordnet. Der Absperrvorsprung 8 weist eine gekrümmte Anliegefläche 9 zum Anliegen an der Auslassöffnung 6 auf. In der gezeigten Ausführungsform gemäß Fig. 16 a und 16b ist die gekrümmte Anliegefläche 9 kreisbogenförmig, um an der Auslassöffnung 6 anliegen zu können. Die Einlassöffnung 5 ist die an einer Mantelfläche eines zylinderförmigen weiteren Hohlraums 11 angeordnet. Es verbindet die Einlassöffnung 5 den Hohlraum 4 und den senkrecht auf den Hohlraum 4 stehenden, weiteren Hohlraum 11. Der Führungskörper 7 des Absperrelements 3 ist im Wesentlichen zylinderförmig, wobei der Absperrvorsprung 8 an einer Grundfläche 10 des im Wesentlichen zylinderförmigen Führungskörpers 7 angeordnet ist. Der Hohlraum 4 weist einen zylinderförmigen ersten Abschnitt 17 und einen zweiten Abschnitt 18 auf, der zwischen dem ersten Abschnitt 17 und dem weiteren Hohlraum 11 angeordnet ist. Dabei ist der zylinderförmige weitere Hohlraum 11 in Längsrichtung des zylinderförmigen ersten Abschnitts 17 des Hohlraums 4 angeordnet, wobei die Längsachse des zylinderförmigen weiteren Hohlraums 11 senkrecht zur Längsachse des zylinderförmigen ersten Abschnitts 17 ist. Der Absperrvorsprung 8 weist dieselbe Form wie der zweite Abschnitt 18 des Hohlraums 4 auf. Das Absperrelement 3 ist derart in dem Hohlraum 4 angeordnet, dass die Längsachse des zylinderförmigen ersten Abschnitts 17 des Hohlraums 4 mit der Längsachse des im Wesentlichen zylinderförmigen Führungskörpers 7 des Absperrelements 3 zusammenfällt.

In der gezeigten Ausführungsform gemäß Fig. 16a und 16b ist die Einlassöffnung 5 an der Mantelfläche des zylinderförmigen ersten Abschnitts 17 des Hohlraums 4 angeordnet. Der erste Abschnitt 17 des Hohlraums 4 ist eine das Ventilgehäuse 2 durchbrechende zylinderförmige Bohrung, die an der dem zweiten Abschnitt 18 des Hohlraums 4 gegenüberliegenden Seite einen zweiten 13 Durchbruch bildet. Der Führungskörper 7 ist derart in der Bohrung aufgenommen, dass das Absperrelement 3 teilweise aus dem zweiten Durchbruch 13 herausragt. Das Ventil 1 weist einen Antrieb 19 zum linearen Bewegen des Absperrelements 3 in Richtung der Längsachse des im Wesentlichen zylinderförmigen Führungskörpers 7 auf, wobei der Antrieb 19 an dem aus dem zweiten Durchbruch 13 herausragenden Ende des Absperrelements 3 eingreift.

In Fig. 16a ist das Ventil 1 im geschlossenen Zustand gezeigt, wobei die gekrümmte Anliegefläche 9 des Absperrvorsprungs 8 an der Einlassöffnung 5 anliegt. Zusätzlich liegt der Führungskörper 7 des Absperrelements 3 an der Auslassöffnung 5 an und sperrt diese ab, sodass kein Fluid von der Einlassöffnung 5 in den Hohlraum 4 des Ventils 1 und weiter zur Auslassöffnung 6 strömen kann. In dieser Position ist der Absperrvorsprung 8 in dem zweiten Abschnitt 18 des Hohlraums 4 und der Führungskörper 7 in dem ersten Abschnitt 17 des Hohlraums 4 angeordnet. Um in dem Ventil 1 einen Totraum des Fluids zu vermeiden, kann ein Spalt in dem Hohlraum 4 zwischen dem Ventilgehäuse 2 und dem Führungskörper 7 ausgebildet sein, sodass Fluid durch die Einlassöffnung 5 über den Spalt in den Hohlraum 4 und weiter zu der Auslassöffnung 6 und dem weiteren Hohlraum 11 strömen kann. Dadurch kann eine lange Verweilzeit des Fluids in dem Ventil 1 vermieden werden. Bei linearer Bewegung des Absperrelements 3 in Längsrichtung des zylinderförmigen ersten Abschnitts 17 des Hohlraums 4 in Richtung des zweiten Durchbruchs 13 bewegt sich der Führungskörper 7 des Absperrelements 3 an der Einlassöffnung 5 vorbei. Bei diesem Vorbeibewegen des Führungskörpers 7 wird die Einlassöffnung 5 stufenlos geöffnet, sodass ein Fluid durch die teilweise geöffnete Einlassöffnung 5 in den Hohlraum 4 und weiter zu der Auslassöffnung 6 und dem weiteren Hohlraum 11 strömen kann. Dabei wird das Fluid in dem Hohlraum 4 durch die Grundfläche 10 des im Wesentlichen zylinderförmigen Führungskörpers 7 und die gekrümmte Anliegefläche 9 des Absperrvorsprungs 8 derart geleitet, sodass die Strömung des Fluids im Hohlraum 4 verbessert wird. Bei weiterer linearer Bewegung des Absperrelements 3 in Richtung des zweiten Durchbruchs 13 wird die Einlassöffnung 5 weiter geöffnet, bis der Führungskörper 7 die Einlassöffnung 5 nicht mehr abdeckt und, wie in Fig. 16b gezeigt, die Einlassöffnung 5 vollständig geöffnet ist. Dabei berührt die Grundfläche 10 des im Wesentlichen zylinderförmigen Führungskörpers 7 die Einlassöffnung 5 an dem der Auslassöffnung 6 abgewandten Seite. Mithilfe der Grundfläche 10 und der gekrümmten Anliegefläche 9 des Absperrvorsprungs 8 wird das Fluid in dem Hohlraum 4 in Richtung Auslassöffnung 6 geleitet, wobei im Vergleich zu einem Absperrelement ohne Absperrvorsprung 8 die Strömung des Fluids verbessert ist.

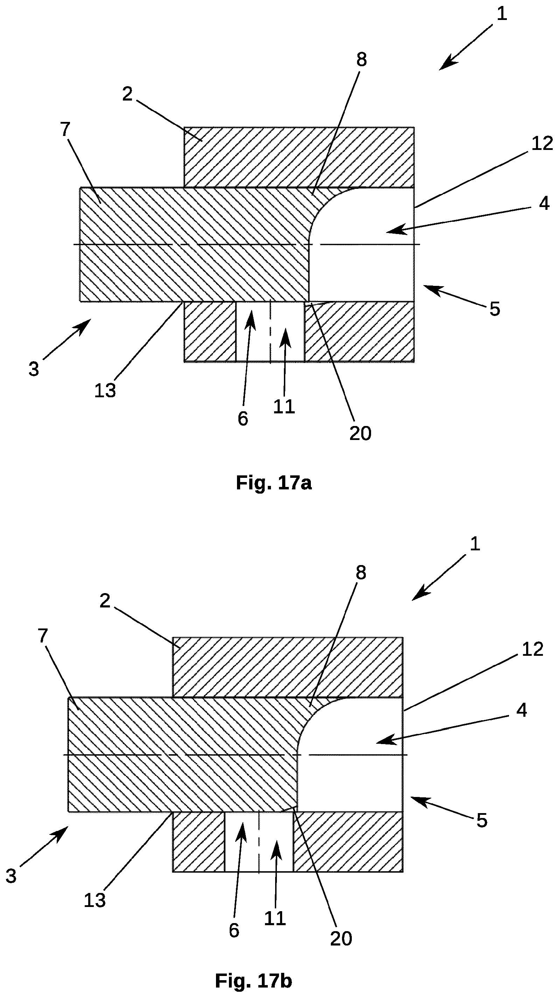

Um einen Überdruck im Inneren des Ventilgehäuses 2 zu vermeiden, kann, wie in Fig. 17a gezeigt, das Ventilgehäuse 2 an mindestens einer der Auslassöffnungen 6 eine Nut 20 aufweisen. Bevorzugt ist die Nut 20 an der der Einlassöffnung 5 zugewandten Seite einer Auslassöffnung 6 angeordnet.

Alternativ kann, wie in Fig. 17b gezeigt, zur Vermeidung eines Überdrucks im Inneren des Ventilgehäuses 2 das Absperrelement 3 eine Nut 20 aufweisen. Bevorzugt ist die Nut 20 an einer Kante zwischen der Mantelfläche und der Grundfläche 10 des im Wesentlichen zylinderförmigen Führungskörpers 7 angeordnet, wobei an derselben Grundfläche 10 der Absperrvorsprung 8 angeordnet ist.

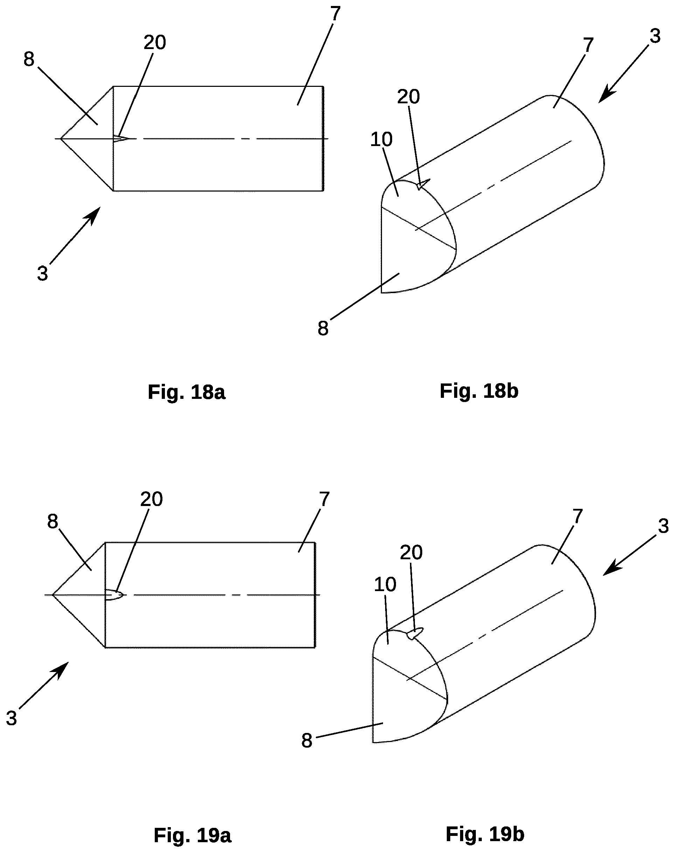

In Fig. 18a und b ist das Absperrelement 3 des in Fig. 17b gezeigten Ventils 1 dargestellt. Die Nut 20 des Absperrelements 3 ist eine tetraederförmige Kerbe, die einen dreieckigen Querschnitt aufweist und an der dem Absperrvorsprung 8 gegenüberliegenden Seite der im Wesentlichen kreisförmigen Grundfläche 10 angeordnet ist. Die Nut 20 ist in Richtung der Längsachse des im Wesentlichen zylinderförmigen Führungskörpers 7 ausgerichtet und ragt in die Grundfläche 10 hinein.

Fig. 19a und b zeigen ein Absperrelement 3 eines weiteren erfindungsgemäßen Ventils 1. Das Absperrelement 3 weist einen Absperrvorsprung 8 und eine Nut 20 mit einem parabelförmigen Querschnitt auf. Die Nut 20 ist an der dem Absperrvorsprung 8 gegenüberliegenden Seite der im Wesentlichen kreisförmigen Grundfläche 10 des im Wesentlichen zylinderförmigen Führungskörpers 7 angeordnet. Die Nut 20 ist in Richtung der Längsachse des im Wesentlichen zylinderförmigen Führungskörpers 7 ausgerichtet und ragt in die Grundfläche 10 hinein.

## Patentansprüche

1. Ventil (1) mit einem Ventilgehäuse (2) und einem Absperrelement (3), wobei das Ventilgehäuse (2) einen Hohlraum (4) zum Aufnehmen des Absperrelements (3), zumindest eine Einlassöffnung (5) zum Einströmen eines Fluids in den Hohlraum (4) und eine oder mehrere Auslassöffnungen (6) zum Ausströmen des Fluids aus dem Hohlraum (4) aufweist, wobei das Absperrelement (3) einen Führungskörper (7) aufweist und beweglich zumindest teilweise in dem Hohlraum (4) des Ventilgehäuses (2) angeordnet ist, und das Absperrelement (3) zumindest einen Absperrvorsprung (8) zum Absperren mindestens einer der einen oder mehreren Auslassöffnungen (6) aufweist,
**dadurch gekennzeichnet, dass**
das Absperrelement (3) in dem Hohlraum (4) eine Toleranz aufweist, sodass in dem Hohlraum (4) zwischen dem Führungskörper (7) des Absperrelements (3) und dem Ventilgehäuse (2) ein Spalt ausgebildet ist, durch den Fluid strömen kann und ohne Einsatz einer Dichtung durch eine gewählte Passung der Spalt einen Leckagestrom des Fluids bildet, und wobei der Führungskörper (7) eine in Längsrichtung des Führungskörper (7) verlaufende Nut (20) aufweist und/oder dass das Ventilgehäuse (2) eine von einer Auslassöffnung (6) in Richtung der zumindest einen der einen oder mehreren Einlassöffnungen (5) verlaufende Nut (20) aufweist, wobei
das Ventilgehäuse (2) eine Heizung und/oder eine Kühlung zur Regelung der Temperatur des Ventils (1) aufweist.

2. Ventil (1) mit einem Ventilgehäuse (2) und einem Absperrelement (3), wobei das Ventilgehäuse (2) einen Hohlraum (4) zum Aufnehmen des Absperrelements (3), zumindest eine Einlassöffnung (5) zum Einströmen eines Fluids in den Hohlraum (4) und eine oder mehrere Auslassöffnungen (6) zum Ausströmen des Fluids aus dem Hohlraum (4) aufweist, wobei das Absperrelement (3) einen Führungskörper (7) aufweist und beweglich zumindest teilweise in dem Hohlraum (4) des Ventilgehäuses (2) angeordnet ist, und das Absperrelement (3) zumindest einen Absperrvorsprung (8) zum Absperren mindestens einer der einen oder mehreren Auslassöffnungen (6) aufweist,
wobei das Ventil (1) mehrere Auslassöffnungen (6) aufweist,
**dadurch gekennzeichnet, dass**
der Absperrvorsprung (8) derart geformt ist, dass in zumindest einer Stellung, in der eine erste der Auslassöffnungen (6) mit dem Absperrvorsprung (8) abgesperrt ist und die Einlassöffnung (5) und eine zweite der Auslassöffnungen (6) für die Strömung eines Fluids offen sind, eine Kante (16) des Absperrvorsprungs (8) zumindest teilweise einem Umfang der zweiten der Auslassöffnungen (6) folgt, wobei
das Ventilgehäuse (2) eine Heizung und/oder eine Kühlung zur Regelung der Temperatur des Ventils (1) aufweist.

3. Ventil (1) nach Anspruch 1, **dadurch gekennzeichnet, dass** der Absperrvorsprung (8) an einer Grundfläche (10) des Führungskörpers (7) angeordnet ist und dass die Nut (20) zur Grundfläche (10) verläuft.

4. Ventil (1) nach Anspruch 1 oder 3, **dadurch gekennzeichnet, dass** die Nut (20) einen in Längsrichtung des Führungskörpers in Richtung des Absperrvorsprungs (8) stetig zunehmenden bzw. von der zumindest einen der einen oder mehreren Auslassöffnungen (6) in Richtung der Einlassöffnung (5) stetig abnehmenden Querschnitt aufweist.

5. Ventil (1) nach einem der vorhergehenden Ansprüche, **dadurch gekennzeichnet, dass** zumindest zwei, vorzugsweise zumindest drei, Auslassöffnungen vorgesehen sind, wobei die Auslassöffnungen (6) insbesondere bevorzugt in einer Ebene senkrecht zu einer Längsachse des Hohlraums (4) angeordnet sind, und/oder
dass der Absperrvorsprung (8) eine gekrümmte Anliegefläche (9) zum Anliegen an mindestens einer der Auslassöffnungen (6) aufweist.

6. Ventil (1) nach einem der vorhergehenden Ansprüche, **gekennzeichnet durch** einen Antrieb (19) zum Bewegen, insbesondere zum Drehen und/oder linearen Bewegen, des Absperrelements (3).

7. Ventil (1) nach einem der vorhergehenden Ansprüche, **dadurch gekennzeichnet, dass** der Führungskörper (7) des Absperrelements (3) im Wesentlichen zylinderförmig ist, wobei der zumindest eine Absperrvorsprung (8) an einer Grundfläche (10) des im Wesentlichen zylinderförmigen Führungskörpers (7) angeordnet ist.

8. Ventil (1) nach einem der vorhergehenden Ansprüche, **dadurch gekennzeichnet, dass** der Hohlraum (4) zylinderförmig ist, wobei eine Längsachse des zylinderförmigen Hohlraums (4) mit der Längsachse des im Wesentlichen zylinderförmigen Führungskörpers (7) des Absperrelements (3) zusammenfällt, wobei vorzugsweise eine Einlassöffnung (5) an einer Grundfläche des zylinderförmigen Hohlraums (4) angeordnet ist, insbesondere deckungsgleich mit einer Grundfläche des zylinderförmigen Hohlraums (4) ist.

9. Ventil (1) nach einem der vorhergehenden Ansprüche, **dadurch gekennzeichnet, dass** das Ventilgehäuse (2) einen oder mehrere weitere Hohlräume (11) aufweist, vorzugsweise wobei der eine oder die mehreren weiteren Hohlräume (11) zylinderförmig sind und über jeweils eine der Auslassöffnungen (6) mit dem Hohlraum (4) verbunden sind.

10. Ventil (1) nach einem der Ansprüche 8 oder 9, **dadurch gekennzeichnet, dass** der Hohlraum (4) eine das Ventilgehäuse (2) durchbrechende zylinderförmige Bohrung ist, wobei die zylinderförmige Bohrung auf zwei gegenüberliegenden Seiten des Ventilgehäuses (2) einen ersten Durchbruch (12) und einen zweiten Durchbruch (13) bildet,
wobei vorzugsweise der erste Durchbruch (12) eine Einlassöffnung (5) bildet.

11. Ventil (1) nach Anspruch 10, **dadurch gekennzeichnet, dass** ein Durchmesser der zylinderförmigen Bohrung gleich einem Durchmesser des im Wesentlichen zylinderförmigen Führungskörpers (7) des Absperrelements (3) ist und der im Wesentlichen zylinderförmige Führungskörper (7) des Absperrelements (3) zumindest teilweise derart in der zylinderförmigen Bohrung aufgenommen ist, dass das Absperrelement (3) zumindest teilweise aus dem zweiten Durchbruch (13) herausragt.

12. Ventil (1) nach Anspruch 6 und Anspruch 11, **dadurch gekennzeichnet, dass** der Antrieb (19) zum Drehen des Absperrelements (3) um die Längsachse des im Wesentlichen zylinderförmigen Führungskörpers (7) ist, wobei der Antrieb (19) an einem aus dem zweiten Durchbruch (13) herausragenden Ende des Absperrelements (3) eingreift.

13. Ventil (1) nach einem der Ansprüche 7 bis 12, **dadurch gekennzeichnet, dass** der zumindest eine Absperrvorsprung (8) eine Verlängerung zumindest eines Teiles der Mantelfläche des im Wesentlichen zylinderförmigen Führungskörpers (7) in Richtung der Längsachse des im Wesentlichen zylinderförmigen Führungskörpers (7) des Absperrelements (3) bildet.

14. Verfahren zum Transport von Fluiden, **dadurch gekennzeichnet, dass** ein Fluidstrom in einem Ventil (1) nach einem der Ansprüche 1 bis 13 geregelt und/oder gesteuert wird.

15. Verfahren nach Anspruch 14, **dadurch gekennzeichnet, dass** das Absperrelement (3) des Ventils (1) regelmäßig zur Spülung eines Spalts in dem Hohlraum (4) zwischen dem Ventilgehäuse (2) und dem Führungskörper (7) des Absperrelements (3) oszilliert.

## Claims

1. A valve (1) comprising a valve housing (2) and a shut-off element (3), wherein the valve housing (2) comprises a cavity (4) for receiving the shut-off element (3), at least one inlet opening (5) for a fluid to flow into the cavity (4) and one or more outlet openings (6) for the fluid to flow out of the cavity (4), wherein the shut-off element (3) comprises a guide body (7) and is arranged movably at least partially in the cavity (4) of the valve housing (2), **characterized in that** the shut-off element (3) comprises at least one shut-off projection (8) for shutting off at least one of the outlet openings (6),
**characterised in that**
the shut-off element (3) has a tolerance in the cavity (4), so that a gap is formed in the cavity (4) between the guide body (7) of the shut-off element (3) and the valve housing (2), through which fluid can flow and, without the use of a seal, the gap forms a leakage flow of the fluid due to a selected fit, and wherein the guide body (7) has a groove (20) extending in the longitudinal direction of the guide body (7) and/or that the valve housing (2) has a groove (20) extending from an outlet opening (6) in the direction of the at least one of the one or more inlet openings (5), wherein
the valve housing (2) has a heating and/or cooling system for regulating the temperature of the valve (1).

2. A valve (1) comprising a valve housing (2) and a shut-off element (3), wherein the valve housing (2) comprises a cavity (4) for receiving the shut-off element (3), at least one inlet opening (5) for a fluid to flow into the cavity (4) and one or more outlet openings (6) for the fluid to flow out of the cavity (4), wherein the shut-off element (3) comprises a guide body (7) and is arranged movably at least partially in the cavity (4) of the valve housing (2), **characterized in that** the shut-off element (3) comprises at least one shut-off projection (8) for shutting off at least one of the outlet openings (6),
wherein the valve (1) has a plurality of outlet openings (6),
**characterised in that**
the shut-off projection (8) is shaped such that in at least one position in which a first of the outlet openings (6) is shut off with the shut-off projection (8) and the inlet opening (5) and a second of the outlet openings (6) are open for the flow of a fluid, an edge (16) of the shut-off projection (8) at least partially follows a circumference of the second of the outlet openings (6), wherein
the valve housing (2) has a heating and/or cooling system for controlling the temperature of the valve (1).

3. The valve (1) according to claim 1, **characterized in that** the shut-off projection (8) is arranged on a base surface (10) of the guide body (7) and that the groove (20) runs to the base surface (10).

4. The valve (1) according to claim 2 or 3, **characterized in that** the groove (20) has a cross-section which increases continuously in the longitudinal direction of the guide body in the direction of the shut-off projection (8) or which decreases continuously from at least one of the one or more of the outlet openings (6) in the direction of the inlet opening (5).

5. The valve (1) according to one of the preceding claims, **characterized in that** at least two, preferably at least three outlet openings are provided, wherein the outlet openings (6) are in particular preferably arranged in a plane perpendicular to the longitudinal axis of the cavity (4), and/or
**in that** the shut-off projection (8) has a curved contact surface (9) for contact with at least one of the outlet openings (6).

6. The valve (1) according to one of the preceding claims, **characterised by** a drive (19) for moving, in particular for rotating and/or linearly moving, the shut-off element (3).

7. The valve (1) according to one of the preceding claims, **characterised in that** the guide body (7) of the shut-off element (3) is substantially cylindrical, wherein the at least one shut-off projection (8) is arranged on a base surface (10) of the substantially cylindrical guide body (7).

8. The valve (1) according to one of the preceding claims, **characterized in that** the cavity (4) is cylindrical, wherein the longitudinal axis of the cylindrical cavity (4) coincides with the longitudinal axis of the substantially cylindrical guide body (7) of the shut-off element (3), wherein preferably an inlet opening (5) is arranged on a base surface of the cylindrical cavity (4), in particular is congruent with a base surface of the cylindrical cavity (4).

9. The valve (1) according to one of the preceding claims, **characterized in that** the valve housing (2) has one or more further cavities (11), wherein the one or more further cavities (11) preferably are cylindrical and are connected via respectively one of the outlet openings (6) to the cavity (4).

10. The valve (1) according to one of claims 8 or 9, **characterized in that** the cavity (4) is a cylindrical bore passing through the valve housing (2), wherein the bore forms a first (12) and a second (13) aperture on two opposite sides of the valve housing (2),
wherein preferably the first aperture (12) forms an inlet opening (5).

11. The valve (1) according to claim 10, **characterized in that** the diameter of the cylindrical bore is equal to the diameter of the substantially cylindrical guide body (7) of the shut-off element (3) and the substantially cylindrical guide body (7) of the shut-off element (3) is received at least partially in the bore in such a manner that the shut-off element (3) projects at least partially from the second aperture (13).

12. The valve (1) according to claim 6 and claim 11, **characterized in that** the drive (19) is for rotating the shut-off element (3) about the longitudinal axis of the substantially cylindrical guide body (7), wherein the drive (19) engages at an end of the shut-off element (3) projecting from the second aperture (13).

13. The valve (1) according to one of claims 7 to 12, **characterized in that** the at least one shut-off projection (8) forms an extension of at least one part of the lateral surface of the substantially cylindrical guide body (7) in the direction of the substantially cylindrical guide body (7) of the shut-off element (3).

14. A method for transporting fluids, **characterized in that** a fluid flow is regulated and/or controlled in a valve (1) according to one of claims 1 to 13.

15. The method according to claim 14, **characterized in that** the shut-off element (3) of the valve (1) oscillates regularly for flushing a gap in the cavity (4) between the valve housing (2) and the guide body (7) of the shut-off element (3).

## Revendications

1. Vanne (1) comprenant un boîtier de vanne (2) et un élément d'obturation (3), le boîtier de vanne (2) comprenant une cavité (4) pour recevoir l'élément d'obturation (3), au moins une ouverture d'entrée (5) pour l'écoulement d'un fluide dans la cavité (4) et une ou plusieurs ouvertures de sortie (6) pour l'écoulement du fluide hors de la cavité (4), l'élément d'obturation (3) comprenant un corps de guidage (7) et étant disposé de manière mobile au moins partiellement dans la cavité (4) du boîtier de vanne (2), et l'élément d'obturation (3) comprenant au moins une saillie d'obturation (8) pour obstruer au moins une des une ou plusieurs ouvertures de sortie (6),
**caractérisée en ce que** l'élément d'obturation (3) présente une tolérance dans la cavité (4), de sorte qu'un espace est formé dans la cavité (4) entre le corps de guidage (7) de l'élément d'obturation (3) et le boîtier de vanne (2), à travers lequel un fluide peut s'écouler et, sans utilisation d'un joint d'étanchéité, par un ajustement choisi,
l'espace forme un courant de fuite du fluide, et **en ce que** le corps de guidage (7) comprend une rainure (20) s'étendant dans le sens longitudinal du corps de guidage (7) et/ou **en ce que** le boîtier de vanne (2) comprend une rainure (20) s'étendant d'une ouverture de sortie (6) en direction d'au moins une des une ou plusieurs ouvertures d'entrée (5), et **en ce que** le boîtier de vanne (2) comprend un chauffage et/ou un refroidissement pour réguler la température de la vanne (1).

2. Vanne (1) comprenant un corps de vanne (2) et un élément d'obturation (3), le corps de vanne (2) comprenant une cavité (4) pour recevoir l'élément d'obturation (3), au moins une ouverture d'entrée (5) pour l'écoulement d'un fluide dans la cavité (4) et une ou plusieurs ouvertures de sortie (6) pour l'écoulement du fluide hors de la cavité (4), l'élément d'obturation (3) comprenant un corps de guidage (7) et étant disposé de manière mobile au moins partiellement dans la cavité (4) du corps de vanne (2), et l'élément d'obturation (3) comprenant au moins une saillie d'obturation (8) pour obstruer au moins une des une ou plusieurs ouvertures de sortie (6),
dans laquelle la vanne (1) comprend plusieurs ouvertures de sortie (6),
**caractérisée en ce que** la saillie d'obturation (8) est formée de telle sorte que, dans au moins une position dans laquelle une première des ouvertures de sortie (6) est obstruée par la saillie d'obturation (8) et l'ouverture d'entrée (5) et une seconde des ouvertures de sortie (6) sont ouvertes pour l'écoulement d'un fluide, un bord (16) de la saillie d'obturation (8) suit au moins partiellement un périmètre de la seconde des ouvertures de sortie (6), et **en ce que**
le corps de vanne (2) comprend un chauffage et/ou un refroidissement pour réguler la température de la vanne (1).

3. Vanne (1) selon la revendication 1, **caractérisée en ce que** la saillie d'obturation (8) est disposée sur une surface de base (10) du corps de guidage (7) et **en ce que** la rainure (20) s'étend vers la surface de base (10).

4. Vanne (1) selon la revendication 1 ou 3, **caractérisée en ce que** la rainure (20) présente une section transversale augmentant continuellement dans le sens longitudinal du corps de guidage en direction de la saillie d'obturation (8) ou diminuant continuellement à partir d'au moins une des une ou plusieurs ouvertures de sortie (6) en direction de l'ouverture d'entrée (5).

5. Vanne (1) selon l'une des revendications précédentes, **caractérisée en ce qu'**au moins deux, de préférence au moins trois, ouvertures de sortie sont prévues, les ouvertures de sortie (6) étant disposées en particulier de préférence dans un plan perpendiculaire à un axe longitudinal de la cavité (4), et/ou
**en ce que** la saillie d'obturation (8) comprend une surface d'appui incurvée (9) pour s'appuyer sur au moins une des ouvertures de sortie (6).

6. Vanne (1) selon l'une des revendications précédentes, **caractérisée par** un entraînement (19) pour déplacer, en particulier pour faire pivoter et/ou déplacer linéairement, l'élément d'obturation (3).

7. Vanne (1) selon l'une des revendications précédentes, **caractérisée en ce que** le corps de guidage (7) de l'élément d'obturation (3) est essentiellement cylindrique, la saillie d'obturation (8) étant disposée sur une surface de base (10) du corps de guidage (7) essentiellement cylindrique.

8. Vanne (1) selon l'une des revendications précédentes, **caractérisée en ce que** la cavité (4) est cylindrique, un axe longitudinal de la cavité cylindrique coïncidant avec l'axe longitudinal du corps de guidage (7) essentiellement cylindrique de l'élément d'obturation (3), une ouverture d'entrée (5) étant disposée en particulier de manière à coïncider avec une surface de base de la cavité cylindrique (4).

9. Vanne (1) selon l'une des revendications précédentes, **caractérisée en ce que** le corps de vanne (2) comprend une ou plusieurs cavités supplémentaires (11), la ou les cavités supplémentaires (11) étant de préférence cylindriques et reliées à la cavité (4) par chacune des ouvertures de sortie (6).

10. Vanne (1) selon l'une des revendications 8 ou 9, **caractérisée en ce que** la cavité (4) est un alésage cylindrique traversant le corps de vanne (2),
l'alésage cylindrique formant un premier orifice (12) et un second orifice (13) sur des côtés opposés du corps de vanne (2), le premier orifice (12) formant en particulier une ouverture d'entrée (5).

11. Vanne (1) selon la revendication 10, **caractérisée en ce qu'**un diamètre de l'alésage cylindrique est égal à un diamètre du corps de guidage (7) essentiellement cylindrique de l'élément d'obturation (3) et le corps de guidage (7) essentiellement cylindrique de l'élément d'obturation (3) est reçu au moins partiellement dans l'alésage cylindrique de sorte que l'élément d'obturation (3) dépasse au moins partiellement du second orifice (13).

12. Vanne (1) selon la revendication 6 et la revendication 11, **caractérisée en ce que** l'entraînement (19) est destiné à faire pivoter l'élément d'obturation (3) autour de l'axe longitudinal du corps de guidage (7) essentiellement cylindrique, l'entraînement (19) étant engagé sur une extrémité dépassant du second orifice (13) de l'élément d'obturation (3).

13. Vanne (1) selon l'une des revendications 7 à 12, **caractérisée en ce que** la saillie d'obturation (8) forme une extension d'au moins une partie de la surface latérale du corps de guidage (7) essentiellement cylindrique dans le sens de l'axe longitudinal du corps de guidage (7) essentiellement cylindrique de l'élément d'obturation (3).

14. Procédé pour le transport de fluides, **caractérisé en ce qu'**un flux de fluide est régulé et/ou contrôlé dans une vanne (1) selon l'une des revendications 1 à 13.

15. Procédé selon la revendication 14, **caractérisé en ce que** l'élément d'obturation (3) de la vanne (1) oscille régulièrement pour rincer un espace dans la cavité (4) entre le corps de vanne (2) et le corps de guidage (7) de l'élément d'obturation (3).
